# EUROPEAN PATENT APPLICATION

(11) **EP 4 667 509 A1**
(43) Date of publication of application: **24.12.2025**
(21) Application number: 24780375.2
(22) Date of filing: 26.03.2024
(51) Int. Cl.: C08G 65/40, C08G 75/00, C25B 1/04, C25B 9/00, C25B 9/23, C25B 13/04, C25B 13/08, H01B 1/06, H01M 8/10, H01M 8/1025, H01M 8/1027, H01M 8/1032

(54) **POLYMER, ELECTROLYTE MATERIAL, ELECTROLYTE MEMBRANE, ELECTROLYTE MEMBRANE WITH CATALYST LAYER, MEMBRANE ELECTRODE ASSEMBLY, SOLID POLYMER FUEL CELL, AND SOLID POLYMER WATER ELECTROLYSIS DEVICE**

(30) Priority: 30.03.2023 JP 2023055171; 29.01.2024 JP 2024011288
(71) Applicant: Tosoh Corporation, Yamaguchi 746-8501 (JP)
(72) Inventor: IWASHIMA, Toshiki, Ayase-shi, Kanagawa 252-1123 (JP); SUGAI, Keisuke, Ayase-shi, Kanagawa 252-1123 (JP); YOSHINAGA, Shohei, Ayase-shi, Kanagawa 252-1123 (JP); MIYAZAWA, Atsushi, Ayase-shi, Kanagawa 252-1123 (JP); HIMENO, Tomokatsu, Ayase-shi, Kanagawa 252-1123 (JP); SUZUKI, Yui, Ayase-shi, Kanagawa 252-1123 (JP)
(74) Representative: TBK
(86) International application number: PCT/JP2024/012081
(87) International publication number: WO 2024/204267

(57) **Abstract**

A polymer having a structure represented by the following formula (1). 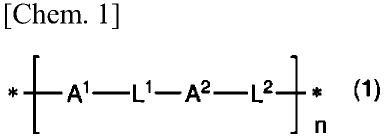 [In the formula (1), A¹ denotes a constitutional unit represented by the following formula (a1), A² denotes a constitutional unit represented by the following formula (a2), L¹ and L² each independently denote a single bond or the like, n denotes an integer in a range of 10 to 100, and * represents a bonding site.] 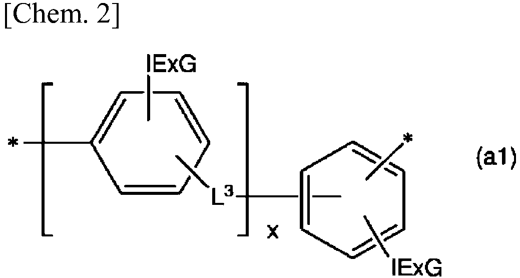 [In the formula (a1), IExG denotes an ion-exchange group, L³ denotes a single bond or the like, x denotes an integer in a range of 2 to 10, and * represents a bonding site.] 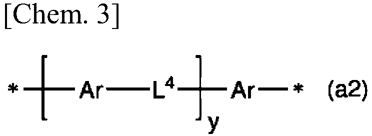 [In the formula (a2), Ar denotes an arylene group having no ion-exchange group, L⁴ denotes a single bond or the like, y denotes an integer in a range of 3 to 20, and * represents a bonding site.]

## Description

### Technical Field

The present disclosure relates to a polymer, an electrolyte material, an electrolyte membrane, an electrolyte membrane with a catalyst layer, a membrane electrode assembly, a solid polymer fuel cell, and a solid polymer water electrolysis device.

### Background Art

In recent years, fuel cells have been spotlighted as a new energy technology with high energy efficiency against the background of environmental issues. In particular, a solid polymer fuel cell using a polymer (macromolecule) material as an electrolyte has a high maximum current density, operates at a low temperature, is therefore suitable for a power source for transportation, such as an automobile, or a low-capacity power source, such as a portable electronic device, and is particularly attracting attention. Furthermore, from the viewpoint of carbon neutrality, the utilization of hydrogen energy of a solid polymer type to which a fuel cell technology is applied is also attracting attention.

A fluorinated polymer is known as a polymer (electrolyte polymer) used for an electrolyte of a solid polymer fuel cell and water electrolysis (for example, see Patent Literature 1). Although fluorinated polymers are widely used in electrolyte applications because of their high proton conductivity, they have problems of high cost and high environmental load.

For this reason, development of electrolyte polymers not using fluorine has also been advanced. For example, Patent Literature 2 discloses an invention relating to a polymer electrolyte membrane composed of a block copolymer having one or more segments (A1) with an ionic group and one or more segments (A2) having no ionic group.

### Citation List

### Patent Literature

Patent Literature 1: Japanese Unexamined Patent Publication No. H11-204119
Patent Literature 2: International Publication No. WO 2013-031675

### Summary of Invention

### Technical Problem

However, non-fluorinated polymers produced by block copolymerization as disclosed in Patent Literature 2 do not necessarily have sufficient proton conductivity.

An object of one aspect of the present disclosure is to provide a polymer with high proton conductivity as an electrolyte.

### Solution to Problem

In some aspects, the present disclosure provides the following [1] to [16].
[1] A polymer having a structure represented by the following formula (1). 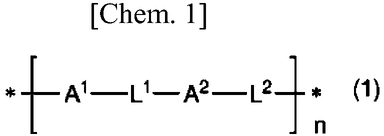 [In the formula (1),
   A¹ denotes a constitutional unit represented by the following formula (a1),
   A² denotes a constitutional unit represented by the following formula (a2),
   L¹ and L² each independently denote a single bond, -O-, -S-, or - SO₂-,
   n denotes an integer in a range of 10 to 100,
   * represents a bonding site,
   a plurality of A¹ are identical to one another,
   a plurality of A² are identical to one another,
   a plurality of L¹ may be identical to or different from one another, and
   a plurality of L² may be identical to or different from one another.] 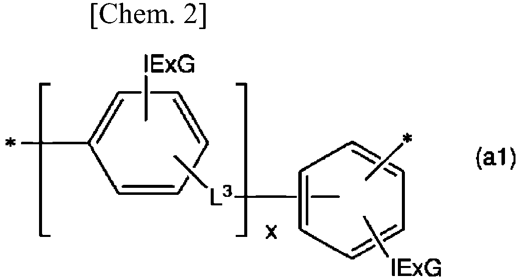 [In the formula (a1),
      IExG denotes an ion-exchange group,
      L³ denotes a single bond, -O-, -S-, -SO₂-, or -CO-,
      x denotes an integer in a range of 2 to 10,
      * represents a bonding site,
      a plurality of IExG may be identical to or different from one another, and
      a plurality of L³ may be identical to or different from one another.] 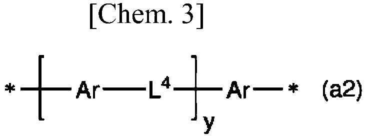 [In the formula (a2),
         Ar denotes an arylene group having no ion-exchange group,
         L⁴ denotes a single bond, -O-, -S-, -SO₂-, or -CO-,
         y denotes an integer in a range of 3 to 20,
         * represents a bonding site,
         a plurality of Ar may be identical to or different from one another, and
         a plurality of L⁴ may be identical to or different from one another.]
[2] The polymer according to [1], wherein L¹, L², L³, and L⁴ each independently denote a single bond or -SO₂-.
[3] The polymer according to [1] or [2], wherein the constitutional unit represented by the formula (a1) contains, as the ion-exchange group, at least one selected from the group consisting of a sulfonate group, an alkyl sulfonate group, and a sulfonimide group.
[4] The polymer according to any one of [1] to [3], wherein the constitutional unit represented by the formula (a2) contains, as the arylene group, at least one selected from the group consisting of a phenylene group, a naphthylene group, and a fluorene group.
[5] The polymer according to any one of [1] to [4], wherein the polymer has a number-average molecular weight in a range of 20,000 to 300,000.
[6] The polymer according to any one of [1] to [5], wherein the polymer is a polymer of a compound represented by the following formula (b1) and a compound represented by the following formula (b2) or an oxide of the polymer.
   [Chem. 4]

   X^{1b}-A¹-X^{2b} (b1)

   [In the formula (b1), A¹ is as defined above, and X^{1b} and X^{2b} each independently denote a halogen atom.]
   [Chem. 5]

   Z^{1b}-A²-Z^{2b} (b2)

   [In the formula (b2), A² is as defined above, and Z^{1b} and Z^{2b} each independently denote a hydroxy group, a thiol group, a halogen atom, a boronic acid group, an alkylborane group, or a boronic acid ester group.]
[7] The polymer according to any one of [1] to [6], wherein
   the polymer has a plurality of polymer units each having the structure represented by the formula (1) and
   has a cross-linking group bonded to three or more of the polymer units.
[8] The polymer according to [7], wherein
   the cross-linking group has one or more aromatic rings, and
   the polymer unit is bonded to the aromatic ring(s).
[9] The polymer according to [7] or [8], wherein the polymer is a reaction product of a polymer of a compound represented by the following formula (b1) and a compound represented by the following formula (b2), or an oxide of the polymer, and a compound having three or more groups that can react with the polymer or the oxide thereof to form a crosslink.
   [Chem. 6]

   X^{1b}-A¹-X^{2b} (b1)

   [In the formula (b1), A¹ is as defined above, and X^{1b} and X^{2b} each independently denote a halogen atom.]
   [Chem. 7]

   Z^{1b}-A²-Z^{2b} (b2)

   [In the formula (b2), A² is as defined above, and Z^{1b} and Z^{2b} each independently denote a hydroxy group, a thiol group, a halogen atom, a boronic acid group, an alkylborane group, or a boronic acid ester group.]
[10] The polymer according to any one of [1] to [9], wherein a ratio of a weight-average molecular weight to a number-average molecular weight ranges from 2.0 to 20.0.
[11] An electrolyte material containing the polymer according to any one of [1] to [10].
[12] An electrolyte membrane containing the polymer according to any one of [1] to [10].
[13] An electrolyte membrane with a catalyst layer, including: the electrolyte membrane according to [12]; and a catalyst layer disposed on one or both surfaces of the electrolyte membrane.
[14] A membrane electrode assembly including: the electrolyte membrane according to [12]; and an electrode layer disposed on one or both surfaces of the electrolyte membrane.
[15] A solid polymer fuel cell including the membrane electrode assembly according to [14].
[16] A solid polymer water electrolysis device including the membrane electrode assembly according to [14].

### Advantageous Effects of Invention

One aspect of the present disclosure can provide a polymer with high proton conductivity as an electrolyte.

### Brief Description of Drawings

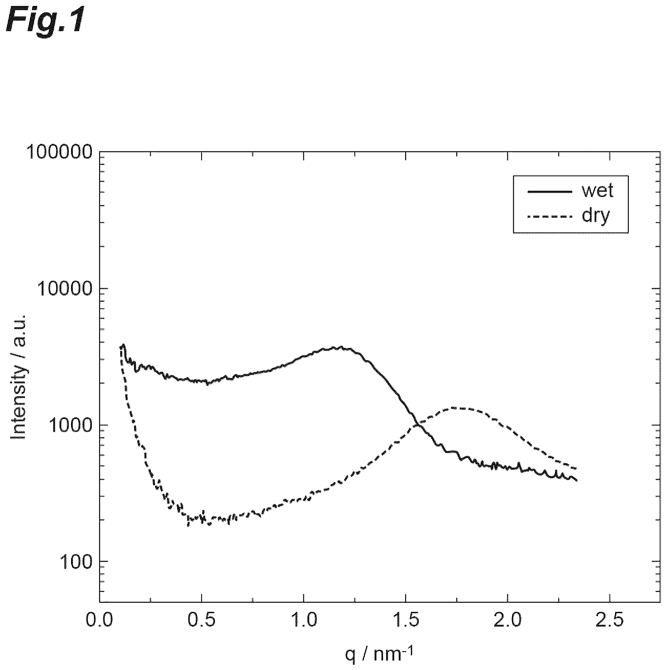

[Fig. 1] Fig. 1 is a graph of the SAXS scattering intensity of an electrolyte membrane of Example 1.

### Description of Embodiments

Exemplary embodiments of the present disclosure will be described below. However, the present disclosure is not limited to the following embodiments. In the present description, a numerical range indicated using "to" indicates a range including numerical values described before and after "to" as the minimum value and the maximum value, respectively. Unless otherwise specifically stated, the units of the numerical values preceding and following "to" are identical. Furthermore, the upper limit and the lower limit described individually can be arbitrarily combined.

### <Polymer>

A polymer of one embodiment (hereinafter also referred to as a "polymer (P)") has a structure represented by the following formula (1).

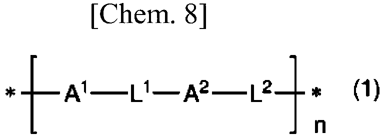

In the formula (1), A¹ denotes a constitutional unit represented by the following formula (a1) (hereinafter also referred to as a "constitutional unit A¹"), A² denotes a constitutional unit represented by the following formula (a2) (hereinafter also referred to as a "constitutional unit A²"), L¹ and L² each independently denote a single bond, -O-, -S-, or -SO₂-, n denotes an integer in the range of 10 to 100, and * represents a bonding site. A plurality of A¹ may be identical to one another, a plurality of A² may be identical to one another, a plurality of L¹ may be identical to or different from one another, and a plurality of L² may be identical to or different from one another.

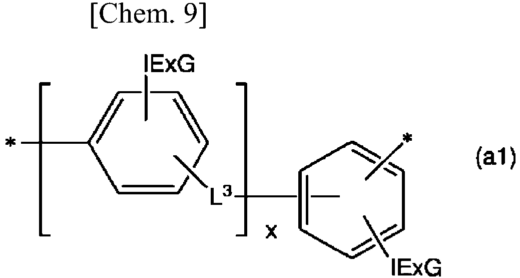

In the formula (a1), IExG denotes an ion-exchange group, L³ denotes a single bond, -O-, -S-, -SO₂-, or -CO-, x denotes an integer in the range of 2 to 10, and * represents a bonding site. A plurality of IExG may be identical to or different from one another, and a plurality of L³ may be identical to or different from one another.

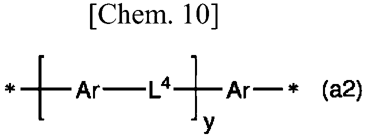

In the formula (a2), Ar denotes an arylene group having no ion-exchange group, L⁴ denotes a single bond, -O-, -S-, -SO₂-, or -CO-, y denotes an integer in the range of 3 to 20, and * represents a bonding site. A plurality of Ar may be identical to or different from one another, and a plurality of L⁴ may be identical to or different from one another.

The polymer (P) is a so-called electrolyte polymer and has high proton conductivity. Thus, a membrane (polymer electrolyte membrane) formed of the polymer (P) has high proton conductivity. Although the reason why the polymer (P) has high proton conductivity is not clear, it is presumed that a plurality of hydrophilic constitutional units A¹ (hydrophilic moieties), which are identical to each other, and a plurality of hydrophobic constitutional units A² (hydrophobic moieties), which are also identical to each other, are precisely arranged, and the ion-exchange groups are evenly spaced and self-assembled in a higher-order structure to induce a microphase-separated structure, thereby forming a favorable proton conduction path in the polymer (P). It is also presumed that the dense presence of three or more ion-exchange groups in the constitutional unit A¹ also contributes to the improvement of phase separability and the improvement of the proton conductivity. These effects are particularly remarkable in a high humidity environment (for example, at a humidity of 80% RH or more).

The polymer (P) also tends to have good gas barrier properties when formed into a membrane. The reason for this is presumed as described below. It is considered that since the polymer (P) has a main chain composed of an arylene group containing a benzene ring, it exhibits low solubility for hydrogen and oxygen, and the segment motion is limited to suppress gas diffusion in the membrane, so that the polymer (P) has good gas barrier properties when formed into a membrane.

### (Polymer (P))

As represented by the formula (1), the polymer (P) has a repeating structure (the structure within the brackets [ ] in the formula (1)) in which the constitutional unit A¹ and the constitutional unit A² are arranged in succession via the linking group (L¹ or L²). The number of repetitions (n) of the structure ranges from 10 to 100, may be 15 or more or 20 or more, and may be 80 or less or 50 or less. A number of repetitions (n) of 15 or more tends to result in good gas barrier properties, and a number of repetitions (n) of 50 or less tends to result in high solubility in a solvent and high membrane formability. The number of repetitions (n) of the structure preferably ranges from 15 to 80, more preferably 20 to 50.

### [Constitutional Unit A¹]

The constitutional unit A¹ has a structure in which the aromatic rings having the ion-exchange group (IExG) are arranged in succession via the linking group (L³).

The ion-exchange group, also referred to as an ionic group, has the property of enabling ion exchange with other ions by releasing ions (for example, cations). The ion-exchange group is, for example, a sulfonate group, an alkyl sulfonate group, a perfluoroalkyl sulfonate group, a sulfonimide group, a phosphonic acid group, a phosphoric acid group, or a carboxy group. These ion-exchange groups include those in the form of salts. For example, the "sulfonate group" is represented by - SO₃M_{1/q} (M denotes H or a metal (for example, Li, Na, K, Rb, Cs, Mg, Ca, Sr, Ba, Ti, Al, Fe, Pt, Rh, Ru, Ir, or Pd), and q denotes the valence of M (for example, an integer in the range of 1 to 4)). The metal denoted by M is present as an ion (cation) and forms a salt with -SO₃⁻.

The alkyl sulfonate group is represented by, for example, - R¹SO₃M_{1/q}. R¹ denotes an alkanediyl group, and the number of carbon atoms thereof preferably ranges from 1 to 12. A specific example of R¹ is, for example, a methylene group, a butane-1,4-diyl group, or a hexane-1,6-diyl group. M and q are as defined above.

The sulfonimide group is represented by, for example, - SO₂NM_{1/q}SO₂R². R² denotes an alkyl group, and the number of carbon atoms thereof preferably ranges from 1 to 6. A specific example of R² may be a methyl group, an ethyl group, or a propyl group. M and q are as defined above.

From the perspective of achieving higher proton conductivity, the constitutional unit A¹ preferably has, as an ion-exchange group, at least one group selected from the group consisting of a sulfonate group, an alkyl sulfonate group, and a sulfonimide group, more preferably a sulfonate group. From the same perspective, it is further preferable that the majority of the plurality of ion-exchange groups present in the constitutional unit A¹ are of the preferred embodiment, and it is particularly preferable that all of the plurality of ion-exchange groups present in the constitutional unit A¹ are of the preferred embodiment.

From the perspective of achieving higher proton conductivity, the constitutional unit A¹ preferably has, as a linking group (L³), at least one group selected from the group consisting of -SO₂- and -CO-, more preferably -SO₂-. From the same perspective, it is further preferable that the majority of the plurality of linking groups (L³) present in the constitutional unit A¹ are of the preferred embodiment.

From the perspective of achieving both higher proton conductivity and chemical durability, the linking group (L³) in the constitutional unit A¹ is preferably a single bond or -SO₂-.

The binding position of the linking group (L³) is preferably, but not particularly limited to, the ortho position or the meta position, more preferably the ortho position, with respect to the ion-exchange group. Thus, the constitutional unit A¹ preferably has a 1,4-phenylene group having an ion-exchange group.

The number of repetitions (x) of the structure within the brackets [ ] in the formula (a1) of the constitutional unit A¹ preferably ranges from 2 to 8, more preferably 3 to 5, from the perspective of achieving higher proton conductivity and high resistance to hot water.

From the perspective of achieving higher proton conductivity, the constitutional unit A¹ preferably includes at least one structure selected from the group consisting of a structure represented by the following formula (a1-1) (hereinafter referred to as a "structure (a1-1)") and a structure represented by the following formula (a1-2) (hereinafter referred to as a "structure (al-2)").

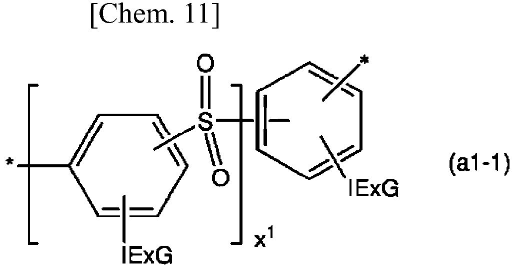

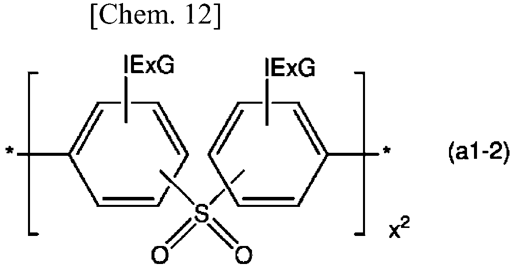

IExG and * in the formula (a1-1) and the formula (al-2) are as defined above. A plurality of IExG may be identical to or different from one another. x¹ in the formula (a1-1) denotes an integer in the range of 2 to 10, and x² in the formula (a1-2) denotes an integer in the range of 2 to 5. When the constitutional unit A¹ includes both the structure (a1-1) and the structure (a1-2), the total of x¹ and 2x² ranges from 2 to 10. x¹ preferably ranges from 2 to 5, more preferably 2 to 3. x² is preferably 2 to 3, more preferably 2.

The constitutional unit A¹ may be composed only of the structure (a1-1) or may have the structure (a1-1) and a structure other than the structure (al-1). **In** the latter case, the structure (a1-1) and the structure other than the structure (a1-1) may be bonded to each other via the linking group (L³). Likewise, the constitutional unit A¹ may be composed only of the structure (a1-2) or may have the structure (al-2) and a structure other than the structure (a1-2). In the latter case, the structure (a1-2) and the structure other than the structure (a1-2) may be bonded to each other via the linking group (L³).

Specific examples of the constitutional unit A¹ include constitutional units represented by the following formulae (A1-1) to (A1-4).

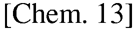

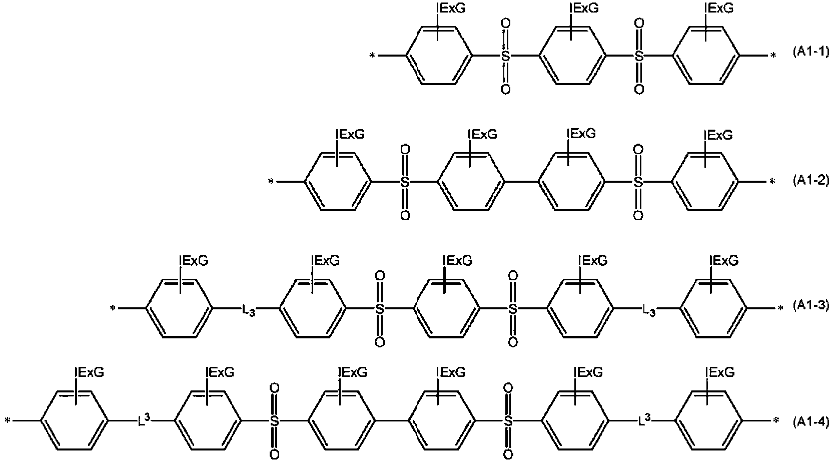

IExG and * in the formulae (A1-1) to (A1-4) and L³ in the formulae (A1-3) and (A1-4) are as defined above. A plurality of IExG may be identical to or different from one another, and a plurality of L³ may be identical to or different from one another.

From the perspective of achieving higher proton conductivity and high chemical durability, the constitutional unit A¹ in polymer (P) is preferably any one of the constitutional units represented by the formulae (A1-1) to (Al-4), more preferably a constitutional unit represented by the formula (A1-2).

### [Constitutional Unit A²]

The constitutional unit A² has a structure in which arylene groups having no ion-exchange group (Ar) are arranged in succession via the linking group (L⁴).

The arylene group is a divalent aromatic hydrocarbon group and has a structure in which two hydrogen atoms are eliminated from the aromatic hydrocarbon. The number of aromatic rings in the arylene group preferably ranges from 1 to 4, more preferably 1 or 2, still more preferably 1, from the perspective of solubility in a solvent and membrane formability. The arylene group may have a substituent other than an ion-exchange group and preferably has no substituent.

A specific example of the arylene group may be a phenylene group, a naphthylene group, a fluorene group, an anthracenylene group, a phenanthrylene group, a triphenylene group, a pyrenylene group, or a tetracenylene group.

From the perspective of solubility in a solvent and membrane formability, the constitutional unit A² preferably has, as an arylene group, at least one selected from the group consisting of a phenylene group, a naphthylene group, and a fluorene group, more preferably a phenylene group, still more preferably a 1,4-phenylene group. From the same perspective, it is further preferable that the majority of the plurality of arylene groups present in the constitutional unit A² are of the preferred embodiment, and all of the plurality of arylene groups present in the constitutional unit A² are particularly preferably each independently a phenylene group, a naphthylene group, or a fluorene group.

From the perspective of high solubility in a solvent, high membrane formability, and high mechanical strength when a membrane formed, the constitutional unit A² preferably has, as a linking group (L⁴), at least one group selected from the group consisting of -SO₂-, -CO-, and a single bond, more preferably -SO₂- or -CO-. From the same perspective, it is further preferable that the majority of the plurality of linking groups (L⁴) present in the constitutional unit A² are of the preferred embodiment, and all of the plurality of linking groups (L⁴) present in the constitutional unit A² may be of the preferred embodiment.

From the perspective of high chemical durability, the linking group (L⁴) in the constitutional unit A² is preferably a single bond or - SO₂-.

The number of repetitions (y) of the structure within the brackets [ ] in the formula (a2) of the constitutional unit A² preferably ranges from 4 to 12, more preferably 5 to 10, from the perspective of achieving higher proton conductivity and high resistance to hot water.

The number of repetitions (y) of the structure within the brackets [ ] in the formula (a2) of the constitutional unit A² is preferably a number (x + [2 to 7]) that is 2 to 7 greater than the number of repetitions (x) of the structure within the brackets [ ] in the formula (a1), from the perspective of achieving higher proton conductivity and high resistance to hot water.

From the perspective of high solubility in a solvent, high membrane formability, and high mechanical strength when a membrane formed, the constitutional unit A² preferably includes at least one structure selected from the group consisting of a structure represented by the following formula (a2-1) and a structure represented by the following formula (a2-2).

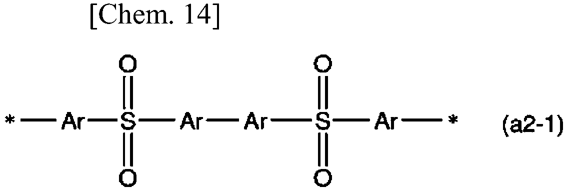

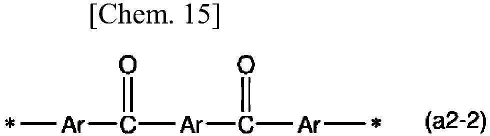

Ar and * in the formula (a2-1) and the formula (a2-2) are as defined above. A plurality of Ar may be identical to or different from one another.

A specific example of the constitutional unit A² may be a constitutional unit represented by the following formula (A2).

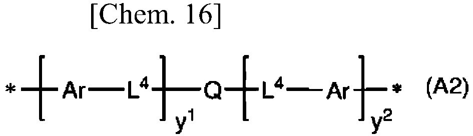

Ar, L⁴, and * in the formula (A2) are as defined above, Q denotes a group having a structure represented by the formula (a2-1) or (a2-2), and y¹ and y² each independently denote an integer in the range of 2 to 4. y¹ and y² are preferably 2 to 3. A plurality of Ar may be identical to or different from one another, and a plurality of L⁴ may be identical to or different from one another.

### [Linking Group]

From the perspective of achieving higher proton conductivity and high chemical durability, the polymer (P) preferably has, as a linking group (L¹ or L²) between the constitutional unit A¹ and the constitutional unit A², at least one group selected from the group consisting of a single bond, -SO₂-, and -S-, more preferably -SO₂-. From the same perspective, it is further preferable that the majority of the linking groups (L¹ and L²) between a plurality of the constitutional units A¹ and the constitutional units A² present in the polymer (P) are of the preferred embodiment, and it is particularly preferable that all of the linking groups (L¹ and L²) between a plurality of the constitutional units A¹ and the constitutional units A² present in the polymer (P) are of the preferred embodiment.

The linking groups (L¹ and L²) between the constitutional unit A¹ and the constitutional unit A² in the polymer (P) are preferably each independently a single bond or -SO₂-, from the perspective of achieving higher proton conductivity and high chemical durability.

As described above, the polymer (P) has the linking groups (L³ and L⁴) in the constitutional unit A¹ and in the constitutional unit A² in addition to the linking groups (L¹ and L²) between the constitutional unit A¹ and the constitutional unit A², and these linking groups (L¹, L², L³, and L⁴) are particularly preferably each independently a single bond or - SO₂-, from the perspective of achieving higher proton conductivity and high chemical durability.

The polymer (P) may be composed of the structure represented by the formula (1) and a terminal structure bonded to the structure. The polymer (P) may be, for example, a compound represented by any of the following formulae (1-1) to (1-3).

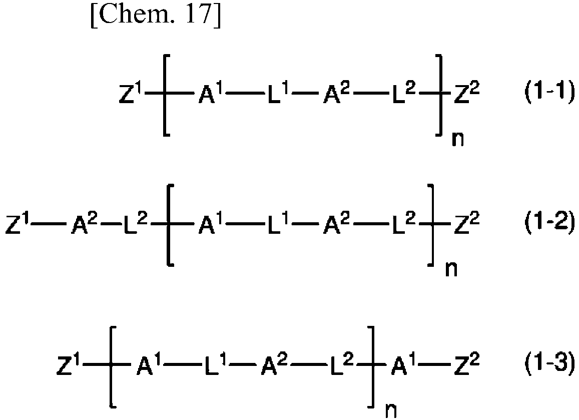

A¹, A², L¹, L², and n in the formulae (1-1) to (1-3) are as defined above. In the formulae (1-1) and (1-2), L² bonded to Z² is a single bond. Z¹ and Z² each independently denote a hydroxy group, a thiol group, a halogen atom, a boronic acid group, an alkylborane group, or a boronic acid ester group. The halogen atom is, for example, a fluorine atom (F), a chlorine atom (Cl), a bromine atom (Br), or an iodine atom (I). The alkylborane group is, for example, a diethylborane group, a disiamylborane group, a dicyclohexylborane group, or a 9-borabicyclo[3.3.1]nonane group. The boronic acid ester group is, for example, a boronic acid pinacol ester group, a boronic acid-1,3-propanediol ester, a boronic acid biscyclohexyldiol ester group, a boronic acid neopentyl glycol ester group, or a boronic acid catechol ester group.

The polymer (P) may include a plurality of polymer units having the structure represented by the formula (1) (hereinafter also referred to as a "polymer unit A"). For example, the polymer (P) may include three or more polymer units A and a cross-linking group bonded to the three or more polymer units A. The polymer (P) having such a cross-linking group (hereinafter also referred to as a "cross-linked polymer (P')") has high swelling resistance.

The polymer unit A has, for example, a structure in which the end groups Z¹ and Z² are removed from any of the compounds represented by the formulae (1-1) to (1-3). Of the two end groups of the polymer unit A, the end group bonded to the cross-linking group may be A¹ and may be A². When the end group bonded to the cross-linking group is a single bond represented by L² (that is, L² bonded to Z² in the formulae (1-1) and (1-2)), the end group bonded to the cross-linking group is regarded as A². The two end groups of the polymer unit A may each be bonded to different cross-linking groups. Of the two end groups of the polymer unit A, the end group opposite the end group bonded to the cross-linking group may be bonded to any one of the end groups Z¹ and Z². The plurality of polymer units A bonded to one cross-linking group may be identical to or different from one another.

The cross-linking group may be a group derived from a known cross-linkable compound. From the perspective of chemical stability, the cross-linking group preferably has one or more aromatic rings. In this case, the polymer unit A is preferably bonded to an aromatic ring of the cross-linking group. The polymer unit A may be bonded directly to the aromatic ring or may be bonded to the aromatic ring via -O-, -S-, or - SO₂-. The number of aromatic rings in the cross-linking group is preferably 1 or 2.

The cross-linking group may be, for example, a group represented by the following formula (c).

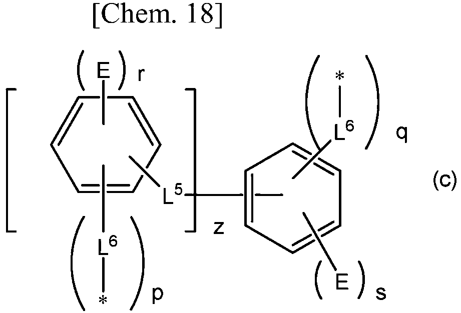

In the formula (c), E denotes a hydroxy group, a thiol group, a halogen atom, a boronic acid group, an alkylborane group, or a boronic acid ester group, L⁵ denotes a single bond, -O-, -S-, -SO₂-, or -CO-, L⁶ denotes a single bond, -O-, -S-, or -SO₂-, * represents a bonding site that bonds to the polymer unit A, p, q, r, and s each denote an integer in the range of 0 to 5, and z is 0 or 1. p + q is 3 or more, p + r ranges from 0 to 5, q + s ranges from 0 to 5, and when z is 0, r and p are 0. A plurality of E, if present, may be identical to or different from one another. A plurality of L⁵, if present, may be identical to or different from one another. A plurality of L⁶ may be identical to or different from one another.

The group represented by the formula (c) may be, for example, a group represented by any of the following formulae (c1) to (c5). The reference numerals and letters in the formulae (c1) to (c5) are as defined above. Some or all of E in the groups represented by the formulae (c1) to (c5) may be substituted with a hydrogen atom.

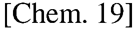

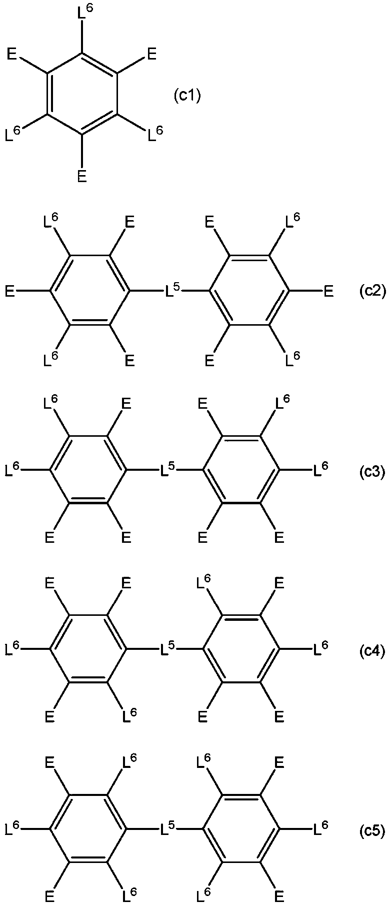

The number of cross-linking groups in the cross-linked polymer (P') may be one or more. A plurality of cross-linking groups may be identical to or different from one another.

The cross-linked polymer (P') may have a cross-linking group bonded to two polymer units A. Such a cross-linking group may have the same structure as the cross-linking group bonded to the three or more polymer units A except that the number of bonding sites bonded to the polymer unit A is different.

The proportion of the structure represented by the formula (1) in the entire polymer (P) is preferably 80% or more by mass from the perspective of achieving higher proton conductivity. From the same perspective, the proportion of the structure represented by the formula (1) in the entire polymer (P) may be 85% or more by mass or 90% or more by mass. The proportion of the structure represented by the formula (1) in the entire polymer (P) may be less than 100% by mass. The proportion of the structure represented by the formula (1) in the entire polymer (P) may be 80% or more by mass and less than 100% by mass, or 85% or more by mass and less than 100% by mass.

Although the polymer (P) may contain a fluorine atom, the polymer (P) preferably has a fluorine content of 5% or less by mass and preferably does not contain a fluorine atom (the fluorine content is equal to or less than the detection limit).

The polymer (P) may have a number-average molecular weight of 20,000 or more, 25,000 or more, or 30,000 or more from the perspective of higher proton conductivity and from the perspective of high mechanical strength when a membrane formed, and may be 300,000 or less, 200,000 or less, or 150,000 or less from the perspective of high solubility in a solvent and high membrane formability. From these perspectives, the polymer (P) may have a number-average molecular weight in the range of 20,000 to 300,000, 25,000 to 200,000, or 30,000 to 150,000.

The polymer (P) may have a weight-average molecular weight of 40,000 or more, 50,000 or more, or 60,000 or more from the perspective of higher proton conductivity and from the perspective of high mechanical strength when a membrane formed, and may be 500,000 or less, 300,000 or less, or 200,000 or less from the perspective of high solubility in a solvent and high membrane formability. From these perspectives, the polymer (P) may have a weight-average molecular weight in the range of 40,000 to 500,000, 50,000 to 300,000, or 60,000 to 200,000.

The ratio of the weight-average molecular weight to the number-average molecular weight (polydispersity index) of the polymer (P) may be 2.0 or more, 2.5 or more, or 2.8 or more. The polymer (P) with a polydispersity index of 2.5 or more tends to have high swelling resistance. From the perspective of solubility in a solvent, the polymer (P) may have a polydispersity index of 20.0 or less, 15.0 or less, or 10.0 or less. The polymer (P) may have a polydispersity index in the range of 2.0 to 20.0, 2.5 to 20.0, 2.5 to 15.0, or 2.8 to 10.0.

The number-average molecular weight and the weight-average molecular weight of the polymer (P) are values in terms of standard poly(ethylene glycol)/poly(ethylene oxide) (PEG/PEO) measured by gel permeation chromatography (GPC).

The polymer (P) can be produced, for example, by reacting (polymerizing) a compound represented by the following formula (b1) (hereinafter also referred to as a "compound (b1)") and a compound represented by the following formula (b2) (hereinafter also referred to as a "compound (b2)"). That is, the polymer (P) may be a polymer of the compound (b1) and the compound (b2).
[Chem. 20]

X^{1b}-A¹-X^{2b} (b1)

In the formula (b1), A¹ is as defined above, and X^{1b} and X^{2b} each independently denote a halogen atom. The halogen atom is, for example, a fluorine atom (F), a chlorine atom (Cl), a bromine atom (Br), or an iodine atom (I).
[Chem. 21]

Z^{1b}-A²-Z^{2b} (b2)

In the formula (b2), A² is as defined above, and Z^{1b} and Z^{2b} each independently denote a hydroxy group, a thiol group, a halogen atom, a boronic acid group, an alkylborane group, or a boronic acid ester group. Examples of the halogen atom, the alkylborane group, and the boronic acid ester group are the same as the examples of the halogen atom, the alkylborane group, and the boronic acid ester group represented by Z¹ and Z² described above.

In the method described above, a structure (repeating structure) in which the constitutional unit A¹ and the constitutional unit A² are alternately arranged can be formed over the entire polymer. Thus, according to the above method, the number of repetitions n in the formula (1) can be easily set to 10 or more.

A polymer (P) in which L¹ and L² in the formula (1) are -O-, -S-, or a single bond is produced by the above method. More specifically, when at least one of Z^{1b} and Z^{2b} is a hydroxy group, a polymer (P) in which at least one of L¹ and L² in the formula (1) is -O- is produced, when at least one of Z^{1b} and Z^{2b} is a thiol group, a polymer (P) in which at least one of L¹ and L² in the formula (1) is -S- is produced, and when at least one of Z^{1b} and Z^{2b} is a halogen atom, a boronic acid group, an alkylborane group, or a boronic acid ester group, a polymer (P) in which at least one of L¹ and L² in the formula (1) is a single bond is produced.

As the compound (b1), it is possible to use two or more types of compounds in which X1b and/or X2b are different. Likewise, as the compound (b2), it is possible to use two or more types of compounds in which Z1b and/or Z2b are different.

The compound (b1) and the compound (b2) can be reacted (polymerized), for example, by an aromatic nucleophilic substitution reaction in a solvent in the presence of a base.

A solvent to be used in the reaction is suitably a solvent that is a good solvent for the compound (b1), the compound (b2), and the polymer (P) and with which the molecular weight of the polymer (P) can be increased at the time of polymerization. For example, N-methyl-pyrrolidone, N,N-dimethylacetamide, N,N-dimethylformamide, dimethyl sulfoxide, diphenyl sulfone, sulfolane, 1,3-dimethyl-2-imidazolidinone, and tetramethylurea are preferably used. These solvents may be used alone or as a mixture of two or more thereof.

The base is used to improve the nucleophilicity of the compound (b2). The base is not particularly limited as long as it can deprotonate the compound (b2). Examples thereof include a hydroxide or carbonate of an alkali metal (lithium, sodium, potassium, rubidium, or cesium), a hydroxide or carbonate of an alkaline-earth metal (magnesium, calcium, strontium, or barium), and an organic base, such as an amine.

The reaction temperature may range from 25°C to 350°C. The reaction temperature is preferably 60°C or more, more preferably 100°C or more, from the perspective of a high reaction rate. The reaction temperature is preferably 300°C or less, more preferably 250°C or less, from the perspective of suppressing decomposition of the polymer.

The compound (b1) and the compound (b2) can also be reacted (polymerized), for example, by a cross-coupling reaction in a solvent in the presence of a catalyst. Examples of the solvent that can be used in the reaction are the same as the examples of the solvent that can be used in the aromatic nucleophilic substitution reaction described above.

The catalyst may be any catalyst that can promote the cross-coupling reaction and may be a known catalyst. For a coupling reaction between halogens, for example, a copper catalyst, a nickel catalyst, or a palladium catalyst can be used. For a coupling reaction between a halogen and a boronic acid group, an alkylborane group, or a boronic acid ester group, for example, a known catalyst (a palladium catalyst, a nickel catalyst, or the like) used in a Suzuki-Miyaura coupling reaction can be used.

The copper catalyst is, for example, copper (I) thiophene-2-carboxylate or tetrakis(acetonitrile) copper (I) hexafluorophosphate.

The nickel catalyst is, for example, bis(1,5-cyclooctadiene)nickel(0), dibromobis(triphenylphosphine)nickel(II), or [1,1'-bis(diphenylphosphino)ferrocene]dichloronickel(II).

The palladium catalyst is, for example, tetrakis(triphenylphosphine)palladium(0), palladium(II) acetate, bis(triphenylphosphine)palladium(II) dichloride, or [1,1'-bis(diphenylphosphino)ferrocene]dichloropalladium(II).

The reaction temperature may range from 0°C to 350°C. The reaction temperature is preferably 30°C or more, more preferably 60°C or more, from the perspective of a high reaction rate. The reaction temperature is preferably 300°C or less, more preferably 250°C or less, from the perspective of suppressing decomposition of the polymer.

In the aromatic nucleophilic substitution reaction and the cross-coupling reaction, water is preferably removed from the reaction system to increase the molecular weight of the polymer (P). The dehydration method is, for example, but not particularly limited to, an azeotropic dehydration method in the presence of an azeotropic solvent in the reaction system, a method of heating to a temperature equal to or higher than the boiling point of water for continuous removal from the reaction system, or a method in which a water absorbent, such as a molecular sieve, coexists. The azeotropic solvent may be any azeotropic solvent that can remove water, for example, benzene, toluene, cyclohexane, or xylene.

The aromatic nucleophilic substitution reaction and the cross-coupling reaction are preferably performed in an inert atmosphere (for example, in a nitrogen atmosphere or an argon atmosphere). After completion of the polymerization reaction, a desired polymer can be produced by recovering a polymer from a reaction liquid and purifying the polymer. A method for recovering a polymer from a reaction liquid is, for example, a method of adding the reaction liquid to a solvent with low polymer solubility to precipitate and recover the polymer as a solid, or a method of removing the solvent from the reaction liquid by evaporation to recover the polymer as a solid. A method for purifying a polymer is, for example, a method of washing in a solvent in which the polymer has low solubility and in which inorganic salts produced as byproducts or compounds derived from a residual monomer has high solubility, or a method of washing using a Soxhlet extractor. The method of recovering and purifying the polymer is not limited to these methods.

The polymer (P) can also be produced by oxidizing a polymer having the structure represented by the formula (1) (for example, a polymer of the compound (b1) and the compound (b2)). More specifically, the polymer (P) may be an oxide of a polymer containing - S- (a sulfide group) as L¹, L², L³, or L⁴ (hereinafter referred to as a "sulfide-containing polymer") among the polymers having the structure represented by the formula (1). From the perspective of high chemical durability, the sulfide-containing polymer is preferably a polymer in which L¹, L², L³, and L⁴ are each independently a single bond, -S-, or - SO₂- among the polymers having the structure represented by the formula (1).

The sulfide-containing polymer may be oxidized by any method and may be oxidized by a known method of oxidizing a sulfide group (-S-) into a sulfonyl group (-SO₂-). Such a method is, for example, a method of immersing the sulfide-containing polymer in a liquid mixture containing acetic acid, sulfuric acid, and hydrogen peroxide. The concentration of acetic acid in the liquid mixture may range from, for example, 50% to 90 % by mass. The concentration of sulfuric acid in the liquid mixture may range from, for example, 5% to 25 % by mass. The concentration of hydrogen peroxide in the liquid mixture may range from, for example, 1% to 15 % by mass. The immersion time may range from, for example, 1 to 100 hours. In this method, the immersion may be followed by heating. The heating temperature may range from, for example, 30°C to 120°C, and the heating time may range from, for example, 0.1 to 24 hours.

The polymer (P) produced by the above method is a polymer containing -SO₂- (a sulfonyl group) as L¹, L², L³, or L⁴ among the polymers having the structure represented by the formula (1). The polymer may be a polymer in which all of the sulfide groups in the sulfide-containing polymer are oxidized to sulfonyl groups (a completely oxidized compound), or may be a polymer in which some of the sulfide groups in the sulfide-containing polymer are oxidized to sulfonyl groups (a partially oxidized compound). The degree of oxidation can be adjusted, for example, by the immersion time, the heating temperature, and the heating time.

The polymer (P) can be produced by reacting (polymerizing) a polymer of the compound (b1) and the compound (b2) or an oxide of the polymer with a compound having three or more groups that can react with the polymer or the oxide thereof to form a crosslink (hereinafter also referred to as a "cross-linkable compound (d)"). That is, the polymer (P) may be a reaction product of a polymer of the compound (b1) and the compound (b2) or an oxide of the polymer with the cross-linkable compound (d).

The above method can produce a cross-linked body (for example, the cross-linked polymer (P')) containing a polymer of the compound (b1) and the compound (b2) or an oxide of the polymer as a polymer unit. The method can form a cross-linked structure while maintaining a precisely arranged structure and can achieve both high proton conductivity and high swelling resistance.

The cross-linkable compound (d) may be a known cross-linkable compound, for example, a low-molecular-weight compound with a molecular weight of 1000 or less. Each of the groups that can react with the polymer or the oxide thereof to form a crosslink is, for example, a hydroxy group, a thiol group, a halogen atom, a boronic acid group, an alkylborane group, or a boronic acid ester group.

From the perspective of chemical stability, the cross-linkable compound (d) preferably has one or more aromatic rings. In this case, the groups that can react with the polymer or the oxide thereof to form a crosslink are preferably directly bonded to the aromatic rings. The number of aromatic rings in the cross-linkable compound (d) is preferably 1 or 2.

The cross-linkable compound (d) may be, for example, a compound represented by the following formula (d).

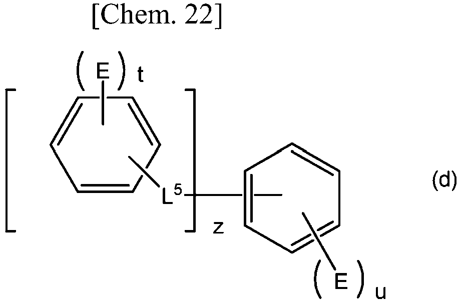

In the formula (d), E, L⁵, and z are as defined above, and t and u each denote an integer in the range of 0 to 5. t + u is 3 or more, and when z is 0, t is 0. A plurality of E may be identical to or different from one another. Among the plurality of E, three or more E react with an end group (X^{1b}, X^{2b}, Z^{1b}, or Z^{2b}) of the polymer or an oxide thereof to form a crosslink.

The polymer of the compound (b1) and the compound (b2), the oxide thereof, and the cross-linkable compound (d) may be used alone or in combination.

The reaction of the polymer of the compound (b1) and the compound (b2) or an oxide of the polymer with the cross-linkable compound (d) can be performed in the same manner as the reaction of the compound (b1) and the compound (b2).

### <Electrolyte Material and Electrolyte Membrane>

An electrolyte material of one embodiment is a material containing an electrolyte and contains the polymer (P) as an electrolyte. An electrolyte membrane of one embodiment is a membrane containing an electrolyte and contains the polymer (P) as an electrolyte. The electrolyte material is used to form the electrolyte membrane. That is, the electrolyte membrane may be formed of the electrolyte material.

The electrolyte material and the electrolyte membrane contain the polymer (P) and therefore have high proton conductivity.

The electrolyte material and the electrolyte membrane may also have a microphase-separated structure in a state of being immersed in water (wet state). More specifically, when the electrolyte membrane immersed in water is subjected to small-angle X-ray scattering (SAXS) measurement, the interplanar spacing of the peak may be 4.0 nm or more.

The electrolyte material and the electrolyte membrane may also have a microphase-separated structure in a vacuum dried state (dry state). More specifically, when the electrolyte membrane dried under vacuum is subjected to small-angle X-ray scattering (SAXS) measurement, the interplanar spacing of the peak may be 2.5 nm or more.

The electrolyte material and the electrolyte membrane may be composed only of the polymer (P) or may contain the polymer (P) and a component (such as an additive agent) other than the polymer (P). That is, the electrolyte material may be a composition. The polymer (P) content of the electrolyte material and the electrolyte membrane may range from 90% to 100% by mass, 94% to 100% by mass, or 97% to 100% by mass. The content is a content based on the total solid content of the electrolyte material or the electrolyte membrane.

The component other than the polymer (P) that can be contained in the electrolyte material and the electrolyte membrane may be a water-holding inorganic substance or a radical scavenger, more specifically, for example, water, silica, cerium oxide, or manganese oxide. These may be used alone or in combination.

The electrolyte membrane may have any thickness and may have a thickness depending on the fuel cell size or the like. From the perspective of reducing the membrane resistance while increasing the mechanical strength of the membrane, the electrolyte membrane may have a thickness of, for example, 1 to 200 µm, 1 to 100 µm, or 1 to 50 µm.

The method for producing electrolyte membrane is not particularly limited, and it can be produced by a known method of forming an electrolyte polymer into a membrane. The method for producing an electrolyte membrane is, for example, a solution casting method, a dispersion casting method, a melt pressing method, or a melt extrusion method.

In the solution casting method, an electrolyte membrane can be produced, for example, by using a solution containing the polymer (P) as an electrolyte material, casting the solution on a substrate, removing the solvent, and then separating the membrane from the substrate.

A solvent used in the solution casting method may be any solvent that can dissolve the polymer (P), for example, N-methyl-pyrrolidone, N,N-dimethylacetamide, N,N-dimethylformamide, dimethyl sulfoxide, diphenyl sulfone, sulfolane, 1,3-dimethyl-2-imidazolidinone, or tetramethylurea. These may be used alone or in combination.

In the dispersion casting method, an electrolyte membrane can be produced, for example, by using a dispersion liquid containing the polymer (P) as an electrolyte material, casting the dispersion liquid on a substrate, removing the dispersion medium, and then separating the membrane from the substrate.

The dispersion medium used in the dispersion casting method may be any dispersion medium that can disperse the polymer (P), for example, water, ethers, alcohols, ketones, acetonitrile, nitromethane, toluene, xylene, chlorobenzene, or chloroform. Examples of the ethers include tetrahydrofuran or diethyl ether. Examples of the alcohols include methanol, ethanol, 1-propanol, isopropyl alcohol, and 1-butanol. Examples of the ketones include acetone or cyclohexanone. These may be used alone or in combination.

The electrolyte material and the electrolyte membrane are suitably used for a solid polymer fuel cell and a solid polymer water electrolysis device. The electrolyte material and the electrolyte membrane can also be used for a redox flow battery, an electrochemical hydrogen pump, a chlor-alkali electrolyzer, a solid acid catalyst, a membrane humidity controller, a gas separation membrane, or the like.

The electrolyte membrane may be bonded to a microporous membrane, a non-woven fabric, a mesh, or the like. That is, another embodiment of the present disclosure is a laminate including an electrolyte membrane and another membrane (a microporous membrane, a non-woven fabric, a mesh, or the like).

### <Electrolyte Membrane with Catalyst Layer>

An electrolyte membrane with a catalyst layer of one embodiment includes the electrolyte membrane of the above embodiment and a catalyst layer disposed on one or both surfaces of the electrolyte membrane.

The catalyst layer is, for example, a layer composed of an anode catalyst or a cathode catalyst of a solid polymer fuel cell, a solid polymer water electrolysis device, or the like. A layer composed of an anode catalyst is hereinafter referred to as an anode catalyst layer, and a layer composed of a cathode catalyst is hereinafter referred to as a cathode catalyst layer.

The configuration of the catalyst layer may be, but is not particularly limited to, a known configuration as a catalyst layer (an anode catalyst layer or a cathode catalyst layer) of a solid polymer fuel cell or a solid polymer water electrolysis device. The catalyst layer may be formed of, for example, an electrically conductive composition containing an anode catalyst or a cathode catalyst, and an electrically conductive material. The catalyst layer may contain an ionomer.

The anode catalyst in a solid polymer fuel cell can be a metal catalyst that can promote an oxidation reaction of a fuel, such as hydrogen, and the anode catalyst in a solid polymer water electrolysis device can be a metal catalyst that can promote an oxygen evolution reaction, for example, platinum, gold, silver, palladium, iridium, rhodium, ruthenium, iron, cobalt, nickel, chromium, tungsten, manganese and vanadium, or an alloy of two or more thereof. These may be used alone or in combination.

The cathode catalyst in a solid polymer fuel cell can be a metal catalyst that can promote a reduction reaction of oxygen, and the cathode catalyst in a solid polymer water electrolysis device can be a metal catalyst that can promote a hydrogen evolution reaction, for example, platinum, gold, silver, palladium, iridium, rhodium, ruthenium, iron, cobalt, nickel, chromium, tungsten, manganese and vanadium, or an alloy of two or more thereof. These may be used alone or in combination.

The electrically conductive material may be, for example, carbon black, such as furnace black, Ketjenblack, channel black, or acetylene black, activated carbon, or graphite. These may be used alone or in combination.

The ionomer can be a known material, for example, an ionomer containing a perfluoro electrolyte. The polymer (P) may also be used as an ionomer. It is preferable to use a material having high oxygen permeability as the ionomer. Although the addition amount of the ionomer in the catalyst layer is not particularly limited, it is preferable to adjust the addition amount within a range in which oxygen diffusion is not significantly inhibited.

The catalyst layer may further contain, as an additive agent, a water repellent, such as fluorinated carbon, a binder, such as a fluorine-containing resin or a hydrocarbon resin having a sulfonate group, or the like.

A laminate including an anode catalyst layer and a cathode catalyst layer on both surfaces of an electrolyte membrane (for example, a laminate with a layer configuration of "anode catalyst layer/electrolyte membrane/cathode catalyst layer") is also called a catalyst coated membrane (CCM) and is suitably used in a solid polymer fuel cell and a solid polymer water electrolysis device.

In the above embodiment, instead of the electrolyte membrane, a laminate including the above-described other membrane (microporous membrane, non-woven fabric, mesh, or the like) can also be used.

### <Membrane Electrode Assembly>

A membrane electrode assembly of one embodiment includes the electrolyte membrane of the above embodiment and an electrode layer disposed on one or both surfaces of the electrolyte membrane.

The electrode layer includes, for example, the catalyst layer (the anode catalyst layer or the cathode catalyst layer) provided in the electrolyte membrane with the catalyst layer of the above embodiment. An electrode layer including an anode catalyst layer is hereinafter referred to as an anode layer, and an electrode layer including a cathode catalyst layer is hereinafter referred to as a cathode layer.

The electrode layer may have any configuration and may have a known configuration as an electrode layer (an anode layer or a cathode layer) of a solid polymer fuel cell or a solid polymer water electrolysis device. The electrode layer may be composed of, for example, the catalyst layer (the anode catalyst layer or the cathode catalyst layer) and a gas diffusion substrate. When the catalyst layer itself has gas diffusivity, the electrode layer may be composed only of the catalyst layer. The gas diffusion substrate can be, for example, a porous membrane. The gas diffusion substrate can also be a substrate with water repellency and electrical conductivity in addition to gas diffusivity (for example, a carbon fiber substrate, such as carbon non-woven fabric or carbon paper, or a titanium fiber sintered body).

A laminate including an anode layer and a cathode layer as electrode layers on both surfaces of an electrolyte membrane (for example, a laminate with a layer configuration of "gas diffusion substrate/anode catalyst layer/electrolyte membrane/cathode catalyst layer/gas diffusion substrate") is also called a membrane electrode assembly (MEA) and is suitably used for a solid polymer fuel cell and a solid polymer water electrolysis device.

In the above embodiment, instead of the electrolyte membrane, a laminate including the above-described other membrane (microporous membrane, non-woven fabric, mesh, or the like) can also be used.

### <Solid Polymer Fuel Cell>

A solid polymer fuel cell of one embodiment includes the membrane electrode assembly of the above embodiment.

The solid polymer fuel cell may have any configuration and may have a known configuration except that the membrane electrode assembly of the above embodiment is used. The solid polymer fuel cell may include, for example, two or more membrane electrode assemblies. Two or more membrane electrode assemblies may be stacked (laminated) with a separator interposed therebetween. The separator can be a known separator for a solid polymer fuel cell.

### <Solid Polymer Water Electrolysis Device>

A solid polymer water electrolysis device of one embodiment includes the membrane electrode assembly of the above embodiment.

The solid polymer water electrolysis device may have any configuration and may have a known configuration except that the membrane electrode assembly of the above embodiment is used. The solid polymer water electrolysis device may further include, for example, a current collector outside the membrane electrode assembly. Furthermore, two or more membrane electrode assemblies may be provided.

### [Examples]

The contents of the present disclosure will be described in more detail below with reference to examples and comparative examples, but the present disclosure is not limited to the examples.

### <Synthesis Example 1>

### (Synthesis of Hydrophilic Monomer (M1))

A 10-L flask equipped with a dropping funnel, a reflux condenser tube, and a mechanical stirrer was purged with nitrogen, was charged with 101 g of 4,4'-bis[(4-chlorophenyl)sulfonyl]-1,1'-biphenyl and 4 L of dehydrated tetrahydrofuran, and was then stirred. The flask was cooled to -70°C in a methanol-dry ice bath, and 320 mL of a 2.6 mol/L n-butyl lithium-hexane solution was added dropwise thereto. Stirring was continued for 1 hour while cooling in the bath. 40 mL of sulfur dioxide gas was introduced into the flask with nitrogen gas. Stirring was continued for 30 minutes while cooling in the bath. The bath was then removed, and the internal temperature was increased to 0°C. Precipitated solid was filtered off by suction filtration and was washed with 200 mL of tetrahydrofuran. The solid collected was dissolved in 2 L of pure water, and 260 mL of a 35% hydrogen peroxide solution was added thereto, followed by stirring for 18 hours. The solid was removed by suction filtration, and 600 g of sodium chloride was added to the collected filtrate. A white solid that had precipitated was collected by suction filtration and was purified by recrystallization from water/isopropyl alcohol. The resulting solid was dried under reduced pressure to prepare a hydrophilic monomer represented by the following formula (M1). The yield was 65%.

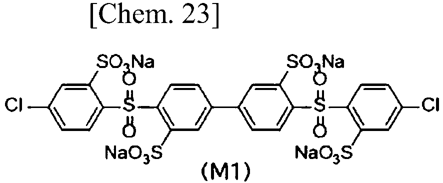

### <Synthesis Example 2>

### (Synthesis of Hydrophobic Monomer (M2))

A 200-mL flask equipped with a stirring bar, a Dean-Stark trap, a reflux condenser, and a calcium chloride tube was charged with 4.0 g of 4,4'-bis[(4-chlorophenyl)sulfonyl]-1,1'-biphenyl, 14.8 g of [1,1'-biphenyl]-4,4'-diol, and 13.2 g of potassium carbonate, and 50 mL of N,N-dimethylacetamide (DMAc) and 50 mL of toluene were added thereto. The temperature was increased to 160°C in an oil bath while stirring, and heating and stirring were continued for 4 hours. Toluene was removed from the Dean-Stark trap, and the temperature was increased to 180°C in the oil bath. After the temperature rise, heating and stirring were continued for 8 hours. The reaction liquid was allowed to cool to room temperature and was poured into 200 mL of 10% hydrochloric acid, and a white solid that had precipitated was filtered off. The filtered solid was washed with 300 mL of ethanol and was dried. The dried solid was purified by recrystallization from NMP/ethanol. The resulting solid was dried under reduced pressure to prepare a hydrophobic monomer (M2) represented by the following formula (M2). The yield was 50%.

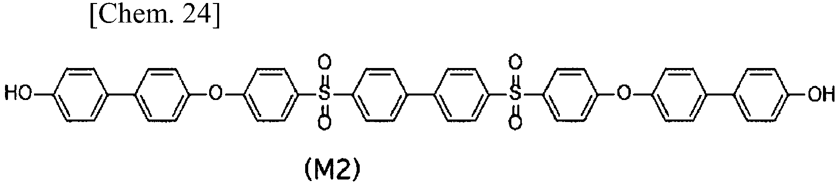

### <Synthesis Example 3>

### (Synthesis of Hydrophobic Monomer (M3))

A 500-mL flask equipped with a stirring bar and a condenser was purged with nitrogen. 41 g of 4,4'-thiobisbenzenethiol, 14 g of 4,4'-bis[(4-chlorophenyl)sulfonyl]-1,1'-biphenyl, 80 mL of DMAc, and 4 g of potassium carbonate were added to the flask. The temperature was increased to 100°C in an oil bath while stirring, and heating and stirring were continued for 6 hours. After cooling the reaction liquid, 100 mL of 1 M hydrochloric acid was added, and the solid that had precipitated was collected by suction filtration. The collected solid was dissolved in dichloromethane and was purified by silica column chromatography using dichloromethane as an eluent. A fraction containing the target compound was collected, and the solvent was evaporated with an evaporator. The resulting solid was purified by recrystallization from dichloromethane. The resulting solid was dried under reduced pressure to prepare a hydrophobic monomer (M3) represented by the following formula (M3). The yield was 40%.

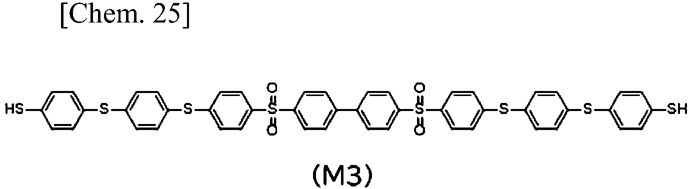

### <Synthesis Example 4>

### (Synthesis of Hydrophobic Monomer (M4))

A 500-mL flask equipped with a stirring bar and a condenser was purged with nitrogen. 20 g of anhydrous aluminum chloride, 10 g of isophthaloyl chloride, and 240 mL of 1,2-dichlorobenzene were added to this flask. While the reaction liquid was stirred, 24 g of 3-bromo-1,1'-biphenyl was added dropwise. The reaction liquid was heated to 40°C and was continuously heated and stirred for 3 hours. The reaction liquid was allowed to cool to room temperature, was then added to 900 mL of ice-cooled 3% hydrochloric acid, and was stirred at room temperature for 18 hours. A white solid that had precipitated was collected by suction filtration and was washed with ethanol. The resulting solid was dried under reduced pressure and was used in the next reaction.

A 100-mL flask was charged with 0.80 g of the dried solid, 0.71 g of 4-(4,4,5,5-tetramethyl-1,3,2-dioxaborolan-2-yl)phenol, 0.11 g of a [1,1'-bis(diphenylphosphino)ferrocene]palladium(II) dichloride dichloromethane adduct, and 0.57 g of sodium carbonate, and was purged with nitrogen. 30 mL of tetrahydrofuran (THF) was added thereto, and the reaction liquid was heated to 50°C with vigorous stirring. Heating and stirring were continued at 50°C for 22 hours. After the reaction liquid was allowed to cool, 100 mL of chloroform and 100 mL of 5% hydrochloric acid were added to the reaction liquid, and the organic layer was separated and collected. The solvent was evaporated with an evaporator, and 20 mL of ethyl acetate was added to prepare a suspension. The suspension was subjected to suction filtration, the filtrate was collected, and the solvent was evaporated with an evaporator, thus yielding an orange oily substance. The oily substance was dissolved in ethyl acetate and was purified by silica column chromatography using a mixed solvent of ethyl acetate/hexane = 1/1 (volume ratio) as an eluent. A fraction containing the target compound was collected, and the solvent was evaporated with an evaporator. The resulting solid was purified by recrystallization from hot toluene. The resulting solid was dried under reduced pressure to prepare a hydrophobic monomer (M4) represented by the following formula (M4). The yield was 60%.

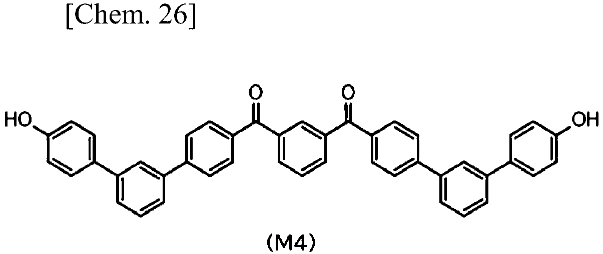

### <Synthesis Example 5>

### (Synthesis of Hydrophobic Monomer (M5))

A hydrophobic monomer (M5) represented by the following formula (M5) was produced in the same manner as in Synthesis Example 4 except that 0.96 g of 4'-(4,4,5,5-tetramethyl-1,3,2-dioxaborolan-2-yl)biphenyl-4-ol was used instead of 4-(4,4,5,5-tetramethyl-1,3,2-dioxaborolan-2-yl)phenol. The yield was 47%.

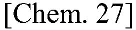

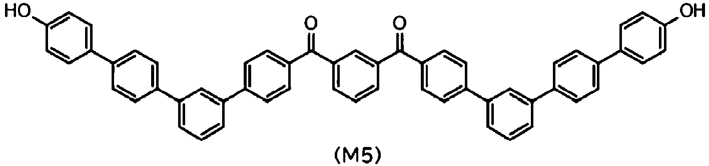

### <Synthesis Example 6>

### (Synthesis of Hydrophobic Monomer (M6))

A 500-mL flask equipped with a stirring bar and a condenser was purged with nitrogen. The flask was charged with 9.5 g of 2,7-dibromo-9,9-diphenylfluorene, 12.1 g of 4-(4,4,5,5-tetramethyl-1,3,2-dioxaborolan-2-yl)phenol, 19 g of potassium carbonate, 2.0 g of tetrakis(triphenylphosphine)palladium(0), and 250 mL of tetrahydrofuran. The reaction liquid was heated to 90°C and was continuously heated and stirred for 3 hours. The reaction liquid was allowed to cool to room temperature, 200 mL of water and 500 mL of ethyl acetate were added thereto, and the organic layer was separated and collected. The solvent was evaporated with an evaporator, and the resulting crude product was purified by silica column chromatography using a mixed solvent of ethyl acetate/hexane = 1/1 (volume ratio) as an eluent. A fraction containing the target compound was collected, and the solvent was evaporated with an evaporator. The resulting solid was dried under reduced pressure to prepare a hydrophobic monomer (M6) represented by the following formula (M6). The yield was 53%.

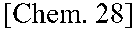

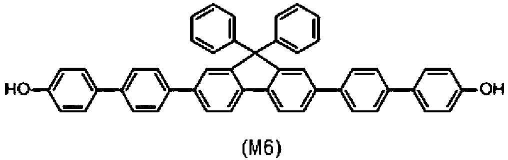

### <Comparative Example 1>

### (Synthesis of Polymer (P1))

A 100-mL three-neck flask equipped with a nitrogen inlet tube, an agitator, and a Dean-Stark trap was charged with 1.334 g of the hydrophobic monomer (M2) prepared in Synthesis Example 2, 0.816 g of diphenylsulfone-4,4'-dichloro-3,3'-disulfonic acid disodium salt and 0.551 g of potassium carbonate, and was purged with nitrogen. 10 mL of DMAc and 10 mL of toluene were then added thereto. After heating to 160°C and carrying out dehydration under reflux for 4 hours, toluene was removed from the Dean-Stark trap. A polymerization was performed at 180°C for 21 hours. The reaction liquid was allowed to cool to room temperature, and a solid was then purified by reprecipitation from 300 mL of isopropyl alcohol (IPA) and was collected by suction filtration. The collected solid was washed with water and was dried under reduced pressure to produce a polymer (P1) having a structure represented by the following formula (P1). The yield was 90%. In the formula (P1), n was calculated from the number-average molecular weight described later. The same applies to n in the formulae (P2) to (P8) described later. 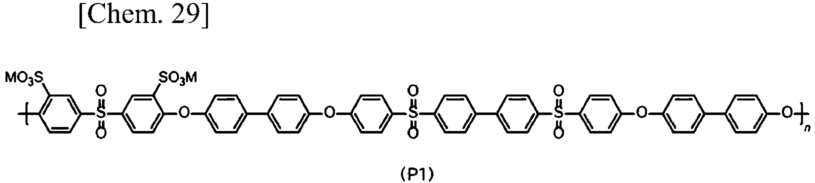 [In the formula (P1), M denotes Na, K, or H, and n denotes a positive number (approximately 31).]

### (Molecular Weight Measurement)

The number-average molecular weight (Mn) and the weight-average molecular weight (Mw) of the polymer (P1) were measured under the following conditions, and the polydispersity index (Mw/Mn) was determined. Mn was 39,000, Mw was 130,000, and Mw/Mn was 3.3.

### [Measurement Conditions]

The number-average molecular weight (Mn) and the weight-average molecular weight (Mw) were measured by GPC. The polymer (P1) was dissolved in an eluent (an N,N-dimethylformamide solvent containing 10 mmol/L of lithium bromide) at a concentration of 1 mg/mL to prepare a sample solution. An apparatus HLC-8320GPC manufactured by Tosoh Corporation was used. Two columns of TSKgel SuperAWM-H (internal diameter: 6.0 mm, length: 15 cm) manufactured by Tosoh Corporation were used. A differential refractometer detector was used as a detector. The measurement was performed at a flow rate of 0.6 mL/min and a temperature of 40°C. The number-average molecular weight (Mn) and the weight-average molecular weight (Mw) were determined in terms of standard poly(ethylene glycol)/poly(ethylene oxide) (PEG/PEO). The weight-average molecular weight (Mw) was divided by the number-average molecular weight (Mn) to determine the polydispersity index (Mw/Mn).

### (Production of Electrolyte Membrane)

The polymer (P1) was dissolved in DMAc to prepare a solution containing 10% by mass of the polymer (P1). The solution was cast-coated on a glass substrate and was dried at 60°C for 12 hours to prepare a membrane (thickness: 24 µm). The membrane thickness was measured at 25 points on the surface using a PG-02 constant-pressure thickness gauge manufactured by TECLOCK CORPORATION, and the average value thereof was used. The membrane was immersed in 1 M hydrochloric acid for 24 hours to replace a metal ion (Na⁺ or K⁺) with a proton (H⁺), was then immersed in pure water for sufficient washing, and was dried under reduced pressure to prepare a polymer electrolyte membrane of Comparative Example 1 (an electrolyte membrane formed of the proton-substituted polymer (P1), thickness: 24 µm).

### (Evaluation)

### [Evaluation of Proton Conductivity]

The proton conductivity of the polymer electrolyte membrane thus produced was measured by the following method.

A measurement cell made of Teflon (registered trademark) (manufactured by Scribner, BT-115) was used, and the produced electrolyte membrane was placed in the cell in contact with four platinum wires. After holding at a relative humidity of 70% for 2 hours, the humidity was increased from a relative humidity of 20% to a specified humidity, and DC resistance measurement by a four-probe method was performed while maintaining the specified humidity. The in-plane proton conductivity of the electrolyte membrane was calculated from the resistance value, the thickness of the polymer electrolyte membrane, and the distance between the probes. The polymer electrolyte membrane of the present comparative example had a proton conductivity of 60 mS/cm (80°C, relative humidity: 100%).

### [Gas Permeability Test]

The gas permeability of the polymer electrolyte membrane was evaluated according to a gas permeability test method by the equal-pressure method (JIS K 7126-2).

More specifically, the polymer electrolyte membrane was first mounted in a hermetically sealed manner between two chambers of a permeation cell. Hydrogen as a measurement gas was supplied to one surface side of the polymer electrolyte membrane, and Ar gas as a carrier gas was supplied to the other surface side. The relative humidity was adjusted by the humidifier temperature of each feed gas and the cell temperature. The measurement gas that permeated through the polymer electrolyte membrane was supplied to a gas chromatograph together with the carrier gas, the gas permeance was measured from the detection data and flow rate, and the gas permeability (cm³·mm/(cm²·s·kPa) was calculated from the gas permeance and the thickness of the polymer electrolyte membrane. The polymer electrolyte membrane of the present comparative example had a hydrogen gas permeability of 0.71 x 10⁻⁷ cm³·mm/(cm²·s·kPa) (80°C, relative humidity: 60%).

### [Small-Angle X-Ray Scattering (SAXS) Measurement]

The polymer electrolyte membrane was subjected to small-angle X-ray scattering (SAXS) measurement in a dry state (under vacuum) and a wet state (immersion in water) under the following conditions.
Apparatus name: NanoSTAR manufactured by Bruker Japan
Voltage and electric current: 45 kV and 120 mA
X-ray wavelength: Cu Kα ray
Camera length: 104.3 cm
Exposure time: 60 minutes (dry state), 180 minutes (wet state)

For the resulting small-angle scattering profile, the interplanar spacing d (= 2π/qₘₐₓ) was calculated from the peak top position qₘₐₓ. The polymer electrolyte (P1) had no small-angle scattering peak in the dry state but had d = 4.0 nm in the wet state.

### [Measurement of Volume Swelling Ratio]

A 3-cm square membrane was punched out from the polymer electrolyte membrane, the punched-out membrane was immersed in 50 mL of pure water at 80°C for 1 hour, and the volume of the membrane was calculated by measuring the dimensional change before and after immersion in pure water. The volume swelling ratio was calculated by dividing the volume of the membrane after the immersion in pure water by the volume of the membrane before the immersion in pure water. The volume swelling ratio was 55%.

### <Comparative Example 2>

In Comparative Example 2, a commercially available Nafion^{™} NR211 (thickness: 25 µm) was used as an evaluation sample and was subjected to various evaluations (the evaluation of proton conductivity, the hydrogen gas permeability test, the SAXS measurement, and the measurement of volume swelling ratio) in the same manner as in Comparative Example 1. The proton conductivity was 130 mS/cm (80°C, relative humidity: 100%), and the hydrogen gas permeability was 1.03 x 10⁻⁷ cm³·mm/(cm²·s·kPa) (80°C, relative humidity: 60%). The interplanar spacing d measured by SAXS was 3.3 nm in the dry state and 5.3 nm in the wet state. The volume swelling ratio was 61%. In the following examples, when the volume swelling ratio was 61% or less based on the volume swelling ratio of the Naflon^{™} NR211, the electrolyte membrane was evaluated as having high swelling resistance.

### <Example 1>

### (Synthesis of Polymer (P2))

A 100-mL three-neck flask equipped with a nitrogen inlet tube, an agitator, and a Dean-Stark trap was charged with 0.983 g of the hydrophobic monomer (M2) prepared in Synthesis Example 2, 1.181 g of the hydrophilic monomer (M1) prepared in Synthesis Example 1, and 0.507 g of potassium carbonate, and was purged with nitrogen. 10 mL of dimethyl sulfoxide (DMSO) and 10 mL of cyclohexane were then added thereto. After heating to 130°C and carrying out dehydration under reflux for 4 hours, cyclohexane was removed from the Dean-Stark trap. A polymerization was performed at 130°C for 150 hours. The reaction liquid was allowed to cool to room temperature, and a solid was then purified by reprecipitation from 300 mL of isopropyl alcohol (IPA) and was collected by suction filtration. The collected solid was washed with water and was dried under reduced pressure to produce a polymer (P2) having a structure represented by the following formula (P2). The yield was 97%. The polymer (P2) had an Mn of 30,000, an Mw of 61,000, and an Mw/Mn of 2.0, as measured in the same manner as in Comparative Example 1. 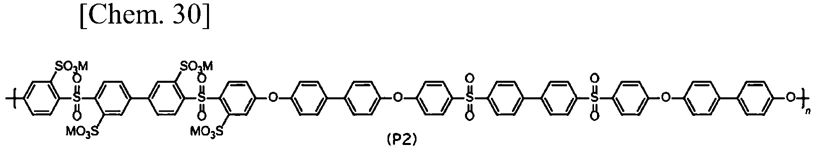 [In the formula (P2), M denotes Na, K, or H, and n denotes a positive number (approximately 20).]

### (Production of Electrolyte Membrane)

The polymer (P2) was dissolved in DMSO to prepare a solution containing 10% by mass of the polymer (P2). The solution was cast-coated on a glass substrate and was dried at 60°C for 12 hours to prepare a membrane (thickness: 49 µm). The membrane was immersed in 1 M hydrochloric acid for 24 hours to replace a metal ion (Na⁺ or K⁺) with a proton (H⁺), was then immersed in pure water for sufficient washing, and was dried under reduced pressure to prepare a polymer electrolyte membrane of Example 1 (an electrolyte membrane formed of the proton-substituted polymer (P2), thickness: 49 µm).

### (Evaluation)

The polymer electrolyte membrane of the present example was subjected to various evaluations (the evaluation of proton conductivity, the hydrogen gas permeability test, the SAXS measurement, and the measurement of volume swelling ratio) in the same manner as in Comparative Example 1. The proton conductivity was 231 mS/cm (80°C, relative humidity: 100%), showing that the polymer electrolyte membrane of the present example had high proton conductivity. The hydrogen gas permeability was 0.15 x 10⁻⁷ cm³·mm/(cm²·s·kPa) (80°C, relative humidity: 60%), showing that the polymer electrolyte membrane of the present example had better gas barrier properties than Nafion^{™} NR211. As shown in Fig. 1, the SAXS measurement showed clear peaks in both the dry state and the wet state. The interplanar spacing d was 3.6 nm in the dry state and 5.5 nm in the wet state as measured by SAXS, showing that the polymer electrolyte membrane of the present example had a microphase-separated structure in the dry state and the wet state. The volume swelling ratio was 184%.

### <Example 2>

### (Synthesis of Polymer (P3))

A 100-mL three-neck flask equipped with a nitrogen inlet tube, an agitator, and a Dean-Stark trap was charged with 2.711 g of the hydrophobic monomer (M3) prepared in Synthesis Example 3, 2.664 g of the hydrophilic monomer (M1) prepared in Synthesis Example 1, and 1.352 g of potassium carbonate, and was purged with nitrogen. 25 mL of DMSO and 25 mL of cyclohexane were then added thereto. After heating to 130°C and carrying out dehydration under reflux for 4 hours, cyclohexane was removed from the Dean-Stark trap. Polymerization was performed at 140°C for 260 hours. The reaction liquid was allowed to cool to room temperature, and a solid was then purified by reprecipitation from 500 mL of isopropyl alcohol (IPA) and was collected by suction filtration. The collected solid was washed with water and was dried under reduced pressure to produce a polymer (P3) having a structure represented by the following formula (P3). The yield was 88%. The polymer (P3) had an Mn of 33,000, an Mw of 75,000, and an Mw/Mn of 2.3, as measured in the same manner as in Comparative Example 1. 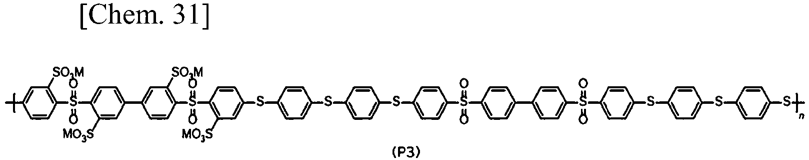 [In the formula (P3), M denotes Na, K, or H, and n denotes a positive number (approximately 20).]

### (Production of Electrolyte Membrane)

A polymer electrolyte membrane (an electrolyte membrane formed of the proton-substituted polymer (P3)) of Example 2 was produced in the same manner as in Example 1 except that the polymer (P3) was used instead of the polymer (P2). The polymer electrolyte membrane had a thickness of 37 µm.

### (Evaluation)

The polymer electrolyte membrane of the present example was subjected to various evaluations (the evaluation of proton conductivity, the hydrogen gas permeability test, the SAXS measurement, and the measurement of volume swelling ratio) in the same manner as in Comparative Example 1. The proton conductivity was 185 mS/cm (80°C, relative humidity: 100%), showing that the polymer electrolyte membrane of the present example had high proton conductivity. The hydrogen gas permeability was 0.14 x 10⁻⁷ cm³·mm/(cm²·s·kPa) (80°C, relative humidity: 60%), showing that the polymer electrolyte membrane of the present example had better gas barrier properties than Nafion^{™} NR211. The interplanar spacing d was 3.9 nm in the dry state and 5.4 nm in the wet state as measured by SAXS, showing that the polymer electrolyte membrane of the present example had a microphase-separated structure in the dry state and the wet state. The volume swelling ratio was 94%.

### <Example 3>

### (Synthesis of Polymer (P4) and Production of Electrolyte Membrane)

The polymer (P3) produced in Example 2 was dissolved in DMSO to prepare a solution containing 10% by mass of the polymer (P3). The solution was cast-coated on a glass substrate and was dried at 60°C for 12 hours to prepare a membrane (thickness: 37 µm). The membrane was immersed in a liquid mixture of 80 mL of acetic acid, 8 mL of sulfuric acid, and 7 mL of hydrogen peroxide, and was stirred at 30°C for 48 hours. The liquid mixture was then heated and stirred at 105°C for 10 minutes. The membrane was immersed in pure water, was well-washed, and was dried under reduced pressure to prepare a membrane (thickness: 37 µm) formed of a polymer (P4) having a structure represented by the following formula (P4). The polymer (P4) had an Mn of 37,000, an Mw of 84,000, and an Mw/Mn of 2.3, as measured in the same manner as described above. An infrared absorption spectrum of the polymer membrane was measured before and after the oxidation reaction, and it was found that absorption peaks at 1570 cm⁻¹ and 1470 cm⁻¹ disappeared after the oxidation, and the absorption peak intensity at 1330 cm⁻¹ increased. The absorption peaks at 1570 cm⁻¹ and 1470 cm⁻¹ were derived from the ring stretching vibration of a benzene ring with a -S- bond, and the absorption peak at 1330 cm⁻¹ was derived from the stretching vibration of a -SO₂- bond, showing that the -S- bond was oxidized to the -SO₂- bond by the oxidation reaction. 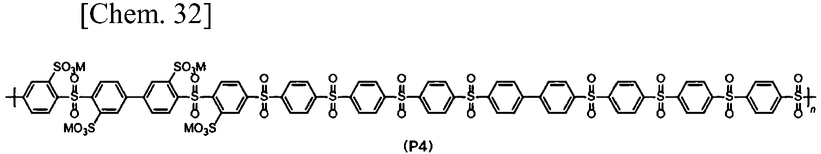 [In the formula (P4), M denotes Na, K, or H, and n denotes a positive number (approximately 20).]

The membrane was immersed in 1 M hydrochloric acid for 24 hours to replace a metal ion (Na⁺ or K⁺) with a proton (H⁺), was then immersed in pure water for sufficient washing, and was dried under reduced pressure to prepare a polymer electrolyte membrane of Example 3 (an electrolyte membrane formed of the proton-substituted polymer (P4), thickness: 37 µm).

### (Evaluation)

The polymer electrolyte membrane of the present example was subjected to various evaluations (the evaluation of proton conductivity, the hydrogen gas permeability test, the SAXS measurement, and the measurement of volume swelling ratio) in the same manner as in Comparative Example 1. The proton conductivity was 172 mS/cm (80°C, relative humidity: 100%), showing that the polymer electrolyte membrane of the present example had high proton conductivity. The hydrogen gas permeability was 0.11 x 10⁻⁷ cm³·mm/(cm²·s·kPa) (80°C, relative humidity: 60%), showing that the polymer electrolyte membrane of the present example had better gas barrier properties than Nafion^{™} NR211. The interplanar spacing d was 3.9 nm in the dry state and 5.2 nm in the wet state as measured by SAXS, showing that the polymer electrolyte membrane of the present example had a microphase-separated structure in the dry state and the wet state. The volume swelling ratio was 74%.

### <Example 4>

### (Synthesis of Polymer (P5))

A 100-mL three-neck flask equipped with a nitrogen inlet tube, an agitator, and a Dean-Stark trap was charged with 0.816 g of the hydrophobic monomer (M4) prepared in Synthesis Example 4, 1.195 g of the hydrophilic monomer (M1) prepared in Synthesis Example 1, and 0.652 g of potassium carbonate, and was purged with nitrogen. 10 mL of DMSO and 10 mL of cyclohexane were then added thereto. After heating to 130°C and carrying out dehydration under reflux for 4 hours, cyclohexane was removed from the Dean-Stark trap. Polymerization was performed at 140°C for 100 hours. The reaction liquid was allowed to cool to room temperature, and a solid was then purified by reprecipitation from 300 mL of isopropyl alcohol (IPA) and was collected by suction filtration. The collected solid was washed with water and was dried under reduced pressure to produce a polymer (P5) having a structure represented by the following formula (P5). The yield was 85%. The polymer (P5) had an Mn of 28,000, an Mw of 66,000, and an Mw/Mn of 2.4, as measured in the same manner as in Comparative Example 1. 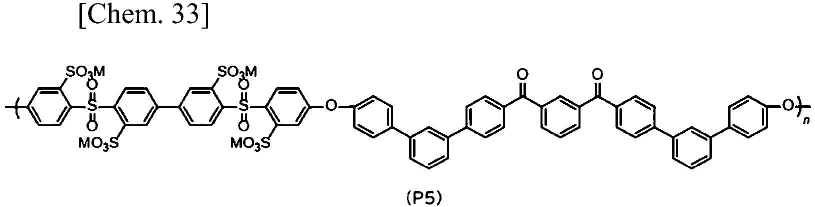 [In the formula (P5), M denotes Na, K, or H, and n denotes a positive number (approximately 20).]

### (Production of Electrolyte Membrane)

A polymer electrolyte membrane (an electrolyte membrane formed of the proton-substituted polymer (P5)) of Example 4 was produced in the same manner as in Example 1 except that the polymer (P5) was used instead of the polymer (P2). The polymer electrolyte membrane had a thickness of 31 µm.

### (Evaluation)

The polymer electrolyte membrane of the present example was subjected to various evaluations (the evaluation of proton conductivity, the hydrogen gas permeability test, the SAXS measurement, and the measurement of volume swelling ratio) in the same manner as in Comparative Example 1. The proton conductivity was 232 mS/cm (80°C, relative humidity: 100%), showing that the polymer electrolyte membrane of the present example had high proton conductivity. The hydrogen gas permeability was 0.13 x 10⁻⁷ cm³·mm/(cm²·s·kPa) (80°C, relative humidity: 60%), showing that the polymer electrolyte membrane of the present example had better gas barrier properties than Nafion^{™} NR211. The interplanar spacing d was 3.4 nm in the dry state and 5.2 nm in the wet state as measured by SAXS, showing that the polymer electrolyte membrane of the present example had a microphase-separated structure in the dry state and the wet state. The volume swelling ratio was 506%.

### <Example 5>

### (Synthesis of Polymer (P6))

A 100-mL three-neck flask equipped with a nitrogen inlet tube, an agitator, and a Dean-Stark trap was charged with 0.924 g of the hydrophobic monomer (M5) prepared in Synthesis Example 5, 1.087 g of the hydrophilic monomer (M1) prepared in Synthesis Example 1, and 0.593 g of potassium carbonate, and was purged with nitrogen. 10 mL of DMSO and 10 mL of cyclohexane were then added thereto. After heating to 130°C and carrying out dehydration under reflux for 4 hours, cyclohexane was removed from the Dean-Stark trap. Polymerization was performed at 150°C for 120 hours. The reaction liquid was allowed to cool to room temperature, and a solid was then purified by reprecipitation from 300 mL of isopropyl alcohol (IPA) and was collected by suction filtration. The collected solid was washed with water and was dried under reduced pressure to produce a polymer (P6) having a structure represented by the following formula (P6). The yield was 94%. The polymer (P6) had an Mn of 29,000, an Mw of 59,000, and an Mw/Mn of 2.0, as measured in the same manner as in Comparative Example 1. 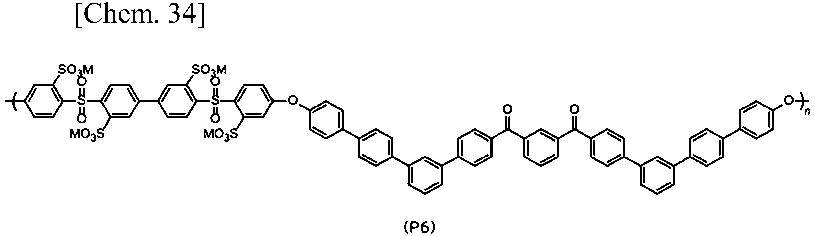 [In the formula (P6), M denotes Na, K, or H, and n denotes a positive number (approximately 20).]

### (Production of Electrolyte Membrane)

A polymer electrolyte membrane (an electrolyte membrane formed of the proton-substituted polymer (P6)) of Example 5 was produced in the same manner as in Example 1 except that the polymer (P6) was used instead of the polymer (P2). The electrolyte membrane had a thickness of 52 µm.

### (Evaluation)

The polymer electrolyte membrane of the present example was subjected to various evaluations (the evaluation of proton conductivity, the hydrogen gas permeability test, the SAXS measurement, and the measurement of volume swelling ratio) in the same manner as in Comparative Example 1. The proton conductivity was 188 mS/cm (80°C, relative humidity: 100%), showing that the polymer electrolyte membrane of the present example had high proton conductivity. The hydrogen gas permeability was 0.11 x 10⁻⁷ cm³·mm/(cm²·s·kPa) (80°C, relative humidity: 60%), showing that the polymer electrolyte membrane of the present example had better gas barrier properties than Nafion^{™} NR211. The interplanar spacing d was 3.8 nm in the dry state and 5.6 nm in the wet state as measured by SAXS, showing that the polymer electrolyte membrane of the present example had a microphase-separated structure in the dry state and the wet state. The volume swelling ratio was 114%.

### <Example 6>

### (Synthesis of Polymer (P7))

A 100-mL three-neck flask equipped with a nitrogen inlet tube, an agitator, and a Dean-Stark trap was charged with 0.932 g of the hydrophobic monomer (M6) prepared in Synthesis Example 6, 1.297 g of the hydrophilic monomer (M1) prepared in Synthesis Example 1, and 0.593 g of potassium carbonate, and was purged with nitrogen. 10 mL of DMSO and 10 mL of cyclohexane were then added thereto. After heating to 130°C and carrying out dehydration under reflux for 4 hours, cyclohexane was removed from the Dean-Stark trap. Polymerization was performed at 150°C for 105 hours. The reaction liquid was allowed to cool to room temperature, and a solid was then purified by reprecipitation from 300 mL of isopropyl alcohol (IPA) and was collected by suction filtration. The collected solid was washed with water and was dried under reduced pressure to produce a polymer (P7) having a structure represented by the following formula (P7). The yield was 90%. The polymer (P7) had an Mn of 51,000, an Mw of 110,000, and an Mw/Mn of 2.2, as measured in the same manner as in Comparative Example 1. 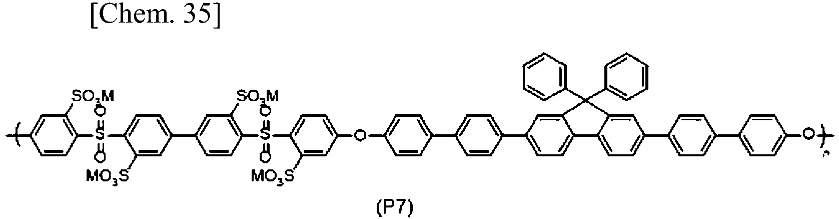 [In the formula (P7), M denotes Na, K, or H, and n denotes a positive number (approximately 30).]

### (Production of Electrolyte Membrane)

A polymer electrolyte membrane (an electrolyte membrane formed of the proton-substituted polymer (P7)) of Example 6 was produced in the same manner as in Example 1 except that the polymer (P7) was used instead of the polymer (P2). The electrolyte membrane had a thickness of 27 µm.

### (Evaluation)

The polymer electrolyte membrane of the present example was subjected to various evaluations (the evaluation of proton conductivity, the hydrogen gas permeability test, the SAXS measurement, and the measurement of volume swelling ratio) in the same manner as in Comparative Example 1. The proton conductivity was 199 mS/cm (80°C, relative humidity: 100%), showing that the polymer electrolyte membrane of the present example had high proton conductivity. The hydrogen gas permeability was 0.12 x 10⁻⁷ cm³·mm/(cm²·s·kPa) (80°C, relative humidity: 60%), showing that the polymer electrolyte membrane of the present example had better gas barrier properties than Nafion^{™} NR211. The interplanar spacing d was 3.7 nm in the dry state and 5.5 nm in the wet state as measured by SAXS, showing that the polymer electrolyte membrane of the present example had a microphase-separated structure in the dry state and the wet state. The volume swelling ratio was 47%, showing that the polymer electrolyte membrane of the present example had high swelling resistance.

### <Comparative Example 3>

### (Synthesis of Polymer (P8))

A 100-mL three-neck flask equipped with a nitrogen inlet tube, an agitator, and a Dean-Stark trap was charged with 0.498 g of 4,4'-bis[(4-chlorophenyl)sulfonyl]-1,1'-biphenyl, 0.532 g of [1,1'-biphenyl]-4,4'-diol, 1.026 g of the hydrophilic monomer (M1) prepared in Synthesis Example 1, and 1.185 g of potassium carbonate, and was purged with nitrogen. 10 mL of DMSO and 10 mL of cyclohexane were then added thereto. After heating to 130°C and carrying out dehydration under reflux for 4 hours, cyclohexane was removed from the Dean-Stark trap. Polymerization was performed at 130°C for 72 hours. The reaction liquid was allowed to cool to room temperature, and a solid was then purified by reprecipitation from 300 mL of isopropyl alcohol (IPA) and was collected by suction filtration. The collected solid was washed with water and was dried under reduced pressure to produce a polymer (P8) having a structure represented by the following formula (P8). The yield was 94%. The polymer (P8) had an Mn of 26,000, an Mw of 69,000, and an Mw/Mn of 2.7, as measured in the same manner as in Comparative Example 1. 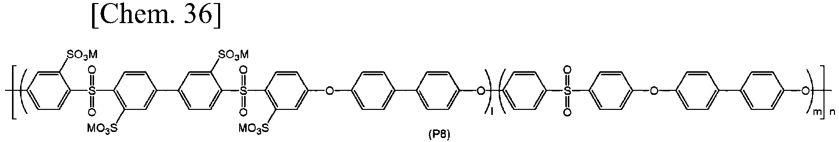 [In the formula (P8), M denotes Na, K, or H, l is approximately 0.39 (0.35 or more and 0.43 or less), m is approximately 0.61 (0.57 or more and 0.65 or less), and n is approximately 40 (15 or more and 100 or less).]

### (Production of Electrolyte Membrane)

A polymer electrolyte membrane (an electrolyte membrane formed of the proton-substituted polymer (P8)) of Comparative Example 3 was produced in the same manner as in Example 1 except that the polymer (P8) was used instead of the polymer (P2). The polymer electrolyte membrane had a thickness of 48 µm.

### (Evaluation)

The polymer electrolyte membrane of the present comparative example was subjected to various evaluations (the evaluation of proton conductivity, the hydrogen gas permeability test, the SAXS measurement, and the measurement of volume swelling ratio) in the same manner as in Comparative Example 1. The proton conductivity was 113 mS/cm (80°C, relative humidity: 100%), and the hydrogen gas permeability was 0.18 x 10⁻⁷ cm³·mm/(cm²·s·kPa) (80°C, relative humidity: 60%). In the SAXS measurement, no clear scattering peak was observed in either the dry state or the wet state. The volume swelling ratio was 167%.

### <Example 7>

### (Synthesis of Polymer (P9))

A 100-mL three-neck flask equipped with a nitrogen inlet tube, an agitator, and a Dean-Stark trap was charged with 0.985 g of the hydrophobic monomer (M2) prepared in Synthesis Example 2, 1.157 g of the hydrophilic monomer (M1) prepared in Synthesis Example 1, and 0.668 g of potassium carbonate, and was purged with nitrogen. 10 mL of dimethyl sulfoxide (DMSO) and 10 mL of cyclohexane were then added thereto. After heating to 130°C and carrying out dehydration under reflux for 4 hours, cyclohexane was removed from the Dean-Stark trap. Polymerization was performed at 130°C for 72 hours. 0.004 g of decafluorobiphenyl was then added thereto, and polymerization was performed at 130°C for 3.5 hours. The reaction liquid was allowed to cool to room temperature, and a solid was then purified by reprecipitation from 300 mL of isopropyl alcohol (IPA) and was collected by suction filtration. The collected solid was washed with water and was dried under reduced pressure to produce a polymer (P9) containing a plurality of polymer units having a structure represented by the formula (P2) and having a cross-linking group derived from decafluorobiphenyl bonded to three or more of the polymer units. The yield was 81.9%. The polymer (P9) had an Mn of 54,000, an Mw of 150,000, and an Mw/Mn of 2.8, as measured in the same manner as in Comparative Example 1.

### (Measurement of Fluorine Content)

The fluorine content of the polymer (P9) was measured by the following method. First, a combustion gas generated by burning a sample (polymer (P9)) was blown into aqueous hydrogen peroxide to cause the aqueous solution to absorb a fluorine component, thereby preparing an absorption liquid. The same operation was then performed without adding the sample to prepare a blank absorption liquid. The fluorine content was measured by ion chromatography (IC) using the absorption liquid, the blank absorption liquid, and a stock solution of the absorption liquid. The polymer (P9) had a fluorine content of 0.1% or less by mass.

### (Production of Electrolyte Membrane)

A polymer electrolyte membrane (an electrolyte membrane formed of the proton-substituted polymer (P9)) of Example 7 was produced in the same manner as in Example 1 except that the polymer (P9) was used instead of the polymer (P2). The electrolyte membrane had a thickness of 62 µm.

### (Evaluation)

The polymer electrolyte membrane of the present example was subjected to various evaluations (the evaluation of proton conductivity, the hydrogen gas permeability test, the SAXS measurement, and the measurement of volume swelling ratio) in the same manner as in Comparative Example 1. The proton conductivity was 200 mS/cm (80°C, relative humidity: 100%), showing that the polymer electrolyte membrane of the present example had high proton conductivity. The hydrogen gas permeability was 0.13 x 10⁻⁷ cm³·mm/(cm²·s·kPa) (80°C, relative humidity: 60%), showing that the polymer electrolyte membrane of the present example had better gas barrier properties than Nafion^{™} NR211. The interplanar spacing d was 4.0 nm in the dry state and 5.0 nm in the wet state as measured by SAXS, showing that the polymer electrolyte membrane of the present example had a microphase-separated structure in the dry state and the wet state. The volume swelling ratio was 60%, showing that the polymer electrolyte membrane of the present example had high swelling resistance.

### <Example 8>

### (Synthesis of Polymer (P10))

A 100-mL three-neck flask equipped with a nitrogen inlet tube, an agitator, and a Dean-Stark trap was charged with 2.955 g of the hydrophobic monomer (M2) prepared in Synthesis Example 2, 3.526 g of the hydrophilic monomer (M1) prepared in Synthesis Example 1, and 2.051 g of potassium carbonate, and was purged with nitrogen. 30 mL of dimethyl sulfoxide (DMSO) and 30 mL of cyclohexane were then added thereto. After heating to 130°C and carrying out dehydration under reflux for 4 hours, cyclohexane was removed from the Dean-Stark trap. Polymerization was performed at 130°C for 72 hours. After the temperature was lowered to room temperature, 0.014 g of decafluorobiphenyl was added thereto, and polymerization was performed at 130°C for 3.5 hours. The reaction liquid was allowed to cool to room temperature, and a solid was then purified by reprecipitation from 1000 mL of isopropyl alcohol (IPA) and was collected by suction filtration. The collected solid was washed with water and was dried under reduced pressure to produce a polymer (P10) containing a plurality of polymer units having a structure represented by the formula (P2) and having a cross-linking group derived from decafluorobiphenyl bonded to three or more of the polymer units. The yield was 79.3%. The polymer (P10) had an Mn of 71,000, an Mw of 200,000, and an Mw/Mn of 2.8, as measured in the same manner as in Comparative Example 1. The polymer P (10) had a fluorine content of 0.1% or less by mass as measured by the same method as in Example 7.

### (Production of Electrolyte Membrane)

A polymer electrolyte membrane (an electrolyte membrane formed of the proton-substituted polymer (P10)) of Example 8 was produced in the same manner as in Example 1 except that the polymer (P10) was used instead of the polymer (P2). The electrolyte membrane had a thickness of 56 µm.

### (Evaluation)

The polymer electrolyte membrane of the present example was subjected to various evaluations (the evaluation of proton conductivity, the hydrogen gas permeability test, the SAXS measurement, and the measurement of volume swelling ratio) in the same manner as in Comparative Example 1. The proton conductivity was 221 mS/cm (80°C, relative humidity: 100%), showing that the polymer electrolyte membrane of the present example had high proton conductivity. The hydrogen gas permeability was 0.12 x 10⁻⁷ cm³·mm/(cm²·s·kPa) (80°C, relative humidity: 60%), showing that the polymer electrolyte membrane of the present example had better gas barrier properties than Nafion^{™} NR211. The interplanar spacing d was 4.0 nm in the dry state and 4.9 nm in the wet state as measured by SAXS, showing that the polymer electrolyte membrane of the present example had a microphase-separated structure in the dry state and the wet state. The volume swelling ratio was 58%, showing that the polymer electrolyte membrane of the present example had high swelling resistance.

### <Example 9>

### (Synthesis of Polymer (P11))

A 100-mL three-neck flask equipped with a nitrogen inlet tube, an agitator, and a Dean-Stark trap was charged with 0.982 g of the hydrophobic monomer (M2) prepared in Synthesis Example 2, 1.139 g of the hydrophilic monomer (M1) prepared in Synthesis Example 1, and 1.442 g of potassium carbonate, and was purged with nitrogen. 10 mL of dimethyl sulfoxide (DMSO) and 10 mL of cyclohexane were then added thereto. After heating to 130°C and carrying out dehydration under reflux for 4 hours, cyclohexane was removed from the Dean-Stark trap. Polymerization was performed at 130°C for 72 hours. After the temperature was lowered to room temperature, 0.004 g of decafluorobiphenyl was added thereto, and polymerization was performed at 130°C for 3.5 hours. The reaction liquid was allowed to cool to room temperature, and a solid was then purified by reprecipitation from 300 mL of isopropyl alcohol (IPA) and was collected by suction filtration. The collected solid was washed with water and was dried under reduced pressure to produce a polymer (P11) containing a plurality of polymer units having a structure represented by the formula (P2) and having a cross-linking group derived from decafluorobiphenyl bonded to three or more of the polymer units. The yield was 78.3%. The polymer (P11) had an Mn of 48,000, an Mw of 230,000, and an Mw/Mn of 4.8, as measured in the same manner as in Comparative Example 1. The polymer P (11) had a fluorine content of 0.1% or less by mass as measured by the same method as in Example 7.

### (Production of Electrolyte Membrane)

A polymer electrolyte membrane (an electrolyte membrane formed of the proton-substituted polymer (P11)) of Example 9 was produced in the same manner as in Example 1 except that the polymer (P11) was used instead of the polymer (P2). The electrolyte membrane had a thickness of 25 µm.

### (Evaluation)

The polymer electrolyte membrane of the present example was subjected to various evaluations (the evaluation of proton conductivity, the hydrogen gas permeability test, the SAXS measurement, and the measurement of volume swelling ratio) in the same manner as in Comparative Example 1. The proton conductivity was 203 mS/cm (80°C, relative humidity: 100%), showing that the polymer electrolyte membrane of the present example had high proton conductivity. The hydrogen gas permeability was 0.16 x 10⁻⁷ cm³·mm/(cm²·s·kPa) (80°C, relative humidity: 60%), showing that the polymer electrolyte membrane of the present example had better gas barrier properties than Nafion^{™} NR211. The interplanar spacing d was 4.0 nm in the dry state and 4.9 nm in the wet state as measured by SAXS, showing that the polymer electrolyte membrane of the present example had a microphase-separated structure in the dry state and the wet state. The volume swelling ratio was 55%, showing that the polymer electrolyte membrane of the present example had high swelling resistance.

### <Comparative Example 4>

### (Synthesis of Polymer (P12))

A 100-mL three-neck flask equipped with a nitrogen inlet tube, an agitator, and a Dean-Stark trap was charged with 1.004 g of the hydrophobic monomer (M2) prepared in Synthesis Example 2, 1.182 g of the hydrophilic monomer (M1) prepared in Synthesis Example 1, 0.004 g of decafluorobiphenyl, and 0.673 g of potassium carbonate, and was purged with nitrogen. 10 mL of dimethyl sulfoxide (DMSO) and 10 mL of cyclohexane were then added thereto. After heating to 130°C and carrying out dehydration under reflux for 4 hours, cyclohexane was removed from the Dean-Stark trap. Polymerization was performed at 130°C for 72 hours. The reaction liquid was allowed to cool to room temperature, and a solid was then purified by reprecipitation from 300 mL of isopropyl alcohol (IPA) and was collected by suction filtration. The collected solid was washed with water and was dried under reduced pressure to produce a polymer (P12) having a cross-linked structure. The yield was 59.2%. The polymer (P12) had an Mn of 47,000, an Mw of 200,000, and an Mw/Mn of 4.3, as measured in the same manner as in Comparative Example 1. In the present synthesis example, the crosslinker decafluorobiphenyl is reacted with the hydrophilic monomer (M1) and the hydrophobic monomer (M2) at the same time, so that the polymer (P12) has a structure in which a constitutional unit derived from the hydrophilic monomer (M1), a constitutional unit derived from the hydrophobic monomer (M2), and a cross-linking group derived from decafluorobiphenyl are randomly arranged.

### (Production of Electrolyte Membrane)

A polymer electrolyte membrane (an electrolyte membrane formed of the proton-substituted polymer (P12)) of Comparative Example 4 was produced in the same manner as in Example 1 except that the polymer (P12) was used instead of the polymer (P2). The polymer electrolyte membrane had a thickness of 63 µm.

### (Evaluation)

The polymer electrolyte membrane of the present comparative example was subjected to various evaluations (the evaluation of proton conductivity, the hydrogen gas permeability test, the SAXS measurement, and the measurement of volume swelling ratio) in the same manner as in Comparative Example 1. The proton conductivity was 179 mS/cm (80°C, relative humidity: 100%), and the hydrogen gas permeability was 0.11 x 10⁻⁷ cm³·mm/(cm²·s·kPa) (80°C, relative humidity: 60%). In the SAXS measurement, no clear scattering peak was observed in either the dry state or the wet state. The volume swelling ratio was 81%. A comparison between Example 7 and Comparative Example 4 showed that cross-linking at an end of the polymer enhances the swelling suppression effect due to cross-linking and the proton conductivity, as compared to a polymer with randomized cross-linking intervals.

**[Table 1]**

| | Proton conductivity [mS/cm] | Hydrogen gas permeability [x 10⁻⁷cm³·mm/(cm²·s·kPa)] | SAXS interplanar spacing d [nm] | | Volume swelling ratio [%] | Mₙ | Mw | Mw/Mn |
|---|---|---|---|---|---|---|---|---|
| | 80°C, 100%RH | 80°C, 60%RH | Dry | Wet | | | | |
| Comparative Example 1 | 60 | 0.71 | - | 4.0 | 55 | 39,000 | 130,000 | 3.3 |
| Comparative Example 2 | 130 | 1.03 | 3.3 | 5.3 | 61 | - | - | - |
| Example 1 | 231 | 0.15 | 3.6 | 5.5 | 184 | 30,000 | 61,000 | 2.0 |
| Example 2 | 185 | 0.14 | 3.9 | 5.4 | 94 | 33,000 | 75,000 | 2.3 |
| Example 3 | 172 | 0.11 | 3.9 | 5.2 | 74 | 37,000 | 84,000 | 2.3 |
| Example 4 | 232 | 0.13 | 3.4 | 5.2 | 506 | 28,000 | 66,000 | 2.4 |
| Example 5 | 188 | 0.11 | 3.8 | 5.6 | 114 | 29,000 | 59,000 | 2.0 |
| Example 6 | 199 | 0.12 | 3.7 | 5.5 | 47 | 51,000 | 110,000 | 2.2 |
| Comparative Example 3 | 113 | 0.18 | - | - | 167 | 26,000 | 69,000 | 2.7 |
| Example 7 | 200 | 0.13 | 4.0 | 5.0 | 60 | 54,000 | 150,000 | 2.8 |
| Example 8 | 221 | 0.12 | 4.0 | 4.9 | 58 | 71,000 | 200,000 | 2.8 |
| Example 9 | 203 | 0.16 | 4.0 | 4.9 | 55 | 48,000 | 230,000 | 4.8 |
| Comparative Example 4 | 179 | 0.11 | - | - | 81 | 47,000 | 200,000 | 4.3 |

The present application is based on a Japanese patent application filed on March 30, 2023 (Japanese Patent Application No. 2023-55171) and a Japanese patent application filed on January 29, 2024 (Japanese Patent Application No. 2024-11288), which are incorporated herein by reference in their entirety. Furthermore, all references cited herein are incorporated in their entirety.

## Claims

1. A polymer having a structure represented by the following formula (1). 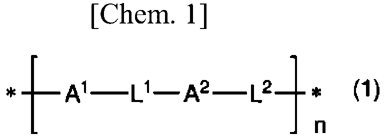 [In the formula (1),
A¹ denotes a constitutional unit represented by the following formula (a1),
A² denotes a constitutional unit represented by the following formula (a2),
L¹ and L² each independently denote a single bond, -O-, -S-, or - SO₂-,
n denotes an integer in a range of 10 to 100,
* represents a bonding site,
a plurality of A¹ are identical to one another,
a plurality of A² are identical to one another,
a plurality of L¹ may be identical to or different from one another, and
a plurality of L² may be identical to or different from one another.] 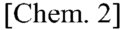 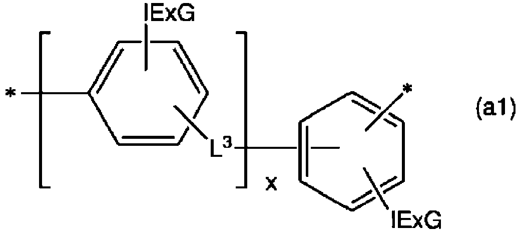 [In the formula (a1),
IExG denotes an ion-exchange group,
L³ denotes a single bond, -O-, -S-, -SO₂-, or -CO-,
x denotes an integer in a range of 2 to 10,
* represents a bonding site,
a plurality of IExG may be identical to or different from one another, and
a plurality of L³ may be identical to or different from one another.] 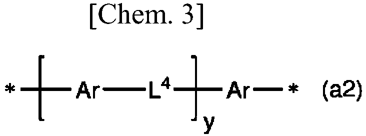 [In the formula (a2),
Ar denotes an arylene group having no ion-exchange group,
L⁴ denotes a single bond, -O-, -S-, -SO₂-, or -CO-,
y denotes an integer in a range of 3 to 20,
* represents a bonding site,
a plurality of Ar may be identical to or different from one another, and
a plurality of L⁴ may be identical to or different from one another.]

2. The polymer according to claim 1, wherein L¹, L², L³, and L⁴ each independently denote a single bond or -SO₂-.

3. The polymer according to claim 1 or 2, wherein the constitutional unit represented by the formula (a1) contains, as the ion-exchange group, at least one selected from the group consisting of a sulfonate group, an alkyl sulfonate group, and a sulfonimide group.

4. The polymer according to any one of claims 1 to 3, wherein the constitutional unit represented by the formula (a2) contains, as the arylene group, at least one selected from the group consisting of a phenylene group, a naphthylene group, and a fluorene group.

5. The polymer according to any one of claims 1 to 4, wherein the polymer has a number-average molecular weight in a range of 20,000 to 300,000.

6. The polymer according to any one of claims 1 to 5, wherein the polymer is a polymer of a compound represented by the following formula (b1) and a compound represented by the following formula (b2) or an oxide of the polymer.
[Chem. 4]
**X^{1b}-A¹-X^{2b}** **(b1)**
[In the formula (b1), A¹ is as defined above, and X^{1b} and X^{2b} each independently denote a halogen atom.]
[Chem. 5]
**Z^{1b}-A²-Z^{2b}** **(b2)**
[In the formula (b2), A² is as defined above, and Z^{1b} and Z^{2b} each independently denote a hydroxy group, a thiol group, a halogen atom, a boronic acid group, an alkylborane group, or a boronic acid ester group.]

7. The polymer according to any one of claims 1 to 6, wherein
the polymer has a plurality of polymer units each having the structure represented by the formula (1) and
has a cross-linking group bonded to three or more of the polymer units.

8. The polymer according to claim 7, wherein
the cross-linking group has one or more aromatic rings, and
the polymer unit is bonded to the aromatic ring(s).

9. The polymer according to claim 7 or 8, wherein the polymer is a reaction product of a polymer of a compound represented by the following formula (b1) and a compound represented by the following formula (b2), or an oxide of the polymer, and a compound having three or more groups that can react with the polymer or the oxide thereof to form a crosslink.
[Chem. 6]
**X^{1b}-A¹-X^{2b}** **(b1)**
[In the formula (b1), A¹ is as defined above, and X^{1b} and X^{2b} each independently denote a halogen atom.]
[Chem. 7]
**Z^{1b}-A²-Z^{2b}** **(b2)**
[In the formula (b2), A² is as defined above, and Z^{1b} and Z^{2b} each independently denote a hydroxy group, a thiol group, a halogen atom, a boronic acid group, an alkylborane group, or a boronic acid ester group.]

10. The polymer according to any one of claims 1 to 9, wherein a ratio of a weight-average molecular weight to a number-average molecular weight ranges from 2.0 to 20.0.

11. An electrolyte material comprising the polymer according to any one of claims 1 to 10.

12. An electrolyte membrane comprising the polymer according to any one of claims 1 to 10.

13. An electrolyte membrane with a catalyst layer, comprising: the electrolyte membrane according to claim 12; and a catalyst layer disposed on one or both surfaces of the electrolyte membrane.

14. A membrane electrode assembly comprising: the electrolyte membrane according to claim 12; and an electrode layer disposed on one or both surfaces of the electrolyte membrane.

15. A solid polymer fuel cell comprising the membrane electrode assembly according to claim 14.

16. A solid polymer water electrolysis device comprising the membrane electrode assembly according to claim 14.
